# EUROPEAN PATENT SPECIFICATION

(11) **EP 4 210 385 B1**
(45) Date of publication and mention of the grant of the patent: **28.01.2026**
(21) Application number: 20954745.4
(22) Date of filing: 28.09.2020
(51) Int. Cl.: H04W 36/00, H04W 36/32, H04W 84/06, H04W 12/04, H04W 36/36

(54) **COMMUNICATION METHOD AND APPARATUS**
KOMMUNIKATIONSVERFAHREN UND -VORRICHTUNG
PROCÉDÉ ET APPAREIL DE COMMUNICATION

(43) Date of publication of application: 12.07.2023
(73) Proprietor: Huawei Technologies Co., Ltd., Shenzhen, Guangdong 518129 (CN)
(72) Inventor: GENG, Tingting, Shenzhen, Guangdong 518129 (CN); YAN, Le, Shenzhen, Guangdong 518129 (CN)
(74) Representative: Gill Jennings & Every LLP
(86) International application number: PCT/CN2020/118423
(87) International publication number: WO 2022/061895

(56) References cited:
- CN-A- 111 316 698
- CN-A- 111 328 114
- CN-A- 111 372 292
- US-A1- 2019 182 655
- "3rd Generation Partnership Project; Technical Specification Group Radio Access Network; Solutions for NR to support non-terrestrial networks (NTN) (Release 16)", vol. RAN WG3, no. V16.0.0, 16 January 2020 (2020-01-16), pages 1 - 140, XP051860814, Retrieved from the Internet <URL:ftp://ftp.3gpp.org/Specs/archive/38_series/38.821/38821-g00.zip 38821-g00.doc> [retrieved on 20200116]
- LENOVO ET AL: "Mobility Management in NTN", vol. RAN WG2, no. electronic; 20200817 - 20200828, 7 August 2020 (2020-08-07), XP052360579, Retrieved from the Internet <URL:https://ftp.3gpp.org/tsg_ran/WG2_RL2/TSGR2_111-e/Docs/R2-2007463.zip R2-2007463 Mobility Management in NTN v1.1.doc> [retrieved on 20200807]
- NOKIA ET AL: "Discussion on feeder link switch for regenerative & transparent NTN LEO scenarios", vol. RAN WG2, no. Prague, Czech Republic; 20190826 - 20190830, 16 August 2019 (2019-08-16), XP051768469, Retrieved from the Internet <URL:http://www.3gpp.org/ftp/tsg_ran/WG2_RL2/TSGR2_107/Docs/R2-1910698.zip> [retrieved on 20190816]
- ZTE CORPORATION ET AL: "Consideration on mobility enhancement in NTN", vol. RAN WG2, no. Electronic; 20200817 - 20200828, 7 August 2020 (2020-08-07), XP052359994, Retrieved from the Internet <URL:https://ftp.3gpp.org/tsg_ran/WG2_RL2/TSGR2_111-e/Docs/R2-2006873.zip R2-2006873_Consideration on mobility enhancement in NTN-v0.docx> [retrieved on 20200807]

## Description

### TECHNICAL FIELD

This application relates to the field of wireless communication technologies, and in particular, to a communication method and apparatus.

### BACKGROUND

In a non-terrestrial network (non-terrestrial network, NTN) communication system, an access network device or a part of functions of an access network device is/are deployed on a non-terrestrial device, for example, a high-altitude platform or a satellite, to provide seamless coverage for a terminal device. In addition, as located at high altitude, the high-altitude platform or the satellite is less susceptible to natural disasters. Therefore, reliability of the NTN communication system is high.

A cell in the NTN communication system is referred to as an NTN cell. An important feature of the NTN communication system is: Coverage of the NTN cell is generally large. For example, a coverage diameter of the cell may reach dozens of kilometers to 1000-odd kilometers. Therefore, one NTN cell may cover geographical areas of a plurality of countries or service areas of a plurality of operators. For example, the NTN system is a satellite communication system. A satellite may broadcast information about a plurality of public land mobile networks (public land mobile networks, PLMNs) or information about a plurality of access and mobility management functions (access and mobility management functions, AMFs), to indicate that the satellite can support services of a plurality of countries or operators.

To improve handover reliability, a network configures a terminal device to perform conditional handover (conditional handover, CHO), and configures one or more candidate target cells for the terminal device. However, when the network configures, as a candidate target cell, an NTN cell that supports a plurality of PLMNs and/or AMFs, there is currently no related solution to how to perform CHO.

"3rd Generation Partnership Project; Technical Specification Group Radio Access Network; Solutions for NR to support non-terrestrial networks (NTN) (Release 16)", a 3GPP STANDARD TECHNICAL REPORT TR 38.821, discloses a set of necessary features/adaptations enabling the operation of the New Radio (NR) protocol in non-terrestrial networks for 3GPP Release 16 with a priority on satellite access. "Mobility Management in NTN", LENOVO et al., 3GPP DRAFT; R2-2007463, discloses condition handover and the corresponding execution condition. "Discussion on feeder link switch for regenerative & transparent NTN LEO scenarios", Nokia et al., 3GPP DRAFT; R2-1910698, discloses an overview of problems and solutions related to feeder link switching for regenerative and transparent LEO scenarios as defined in the TR 38.821.

### SUMMARY

A communication method and apparatus in embodiments of this application are for providing a CHO mechanism applied when a candidate target cell is an NTN cell that supports a plurality of PLMNs and/or AMFs, to improve handover reliability.

According to a first aspect, an embodiment of this application provides a communication method. The method may be performed by a terminal device, or may be performed by a component (for example, a chip or a circuit) configured in the terminal device. In the following descriptions of this application, an example in which the terminal device performs the method is used for description.

The method may include: The terminal device receives first information of a candidate target cell from a source network device, where the first information includes first PLMN information and/or first AMF information, and includes second PLMN information and/or second AMF information; the first information further includes first CHO configuration information and first area information that correspond to the first PLMN information and/or the first AMF information, and includes second CHO configuration information and second area information that correspond to the second PLMN information and/or the second AMF information; and the first area information indicates a first area covered by the candidate target cell, and the second area information indicates a second area covered by the candidate target cell. The terminal device determines a target cell, and target PLMN information and/or target AMF information based on the first information and an area in which the terminal device is currently located, wherein the candidate target cell is an NTN cell that supports a plurality of PLMNs and/or AMFs.

The foregoing technical solution provides a CHO mechanism applied when a cell that covers geographical areas of a plurality of countries or service areas of a plurality of operators is configured as the candidate target cell of the terminal device. The terminal device can determine the target cell, and a target PLMN and/or a target AMF from the configured candidate target cell based on the first information received from the source network device and the area in which the terminal device is currently located. Therefore, the foregoing technical solution can effectively improve handover reliability.

In a possible design of the first aspect, that the terminal device determines a target cell, and target PLMN information and/or target AMF information based on the first information and an area in which the terminal device is currently located may specifically include: If a first CHO execution condition in the first CHO configuration information is met, and the terminal device is currently located in the first area, the terminal device may determine the candidate target cell as the target cell, and determine the first PLMN information as the target PLMN information and/or determine the first AMF information as the target AMF information.

In the foregoing technical solution, from cells meeting the CHO execution condition, the terminal device may respectively determine, as the target cell, the target PLMN information, and the target AMF information, a cell, PLMN information, and AMF information that match the area in which the terminal device is currently located. This can effectively avoid a problem that CHO fails because a selected target PLMN and/or target AMF are/is not a PLMN and/or an AMF supported by the area in which the terminal device is currently located.

In a possible design of the first aspect, that the terminal device determines a target cell, and target PLMN information and/or target AMF information based on the first information and an area in which the terminal device is currently located may specifically further include: If the first CHO execution condition in the first CHO configuration information and a second CHO execution condition in the second CHO configuration information are both met, and the terminal device is currently located in the first area, the terminal device may determine the candidate target cell as the target cell, and determine the first PLMN information as the target PLMN information and/or determine the first AMF information as the target AMF information.

In the foregoing technical solution, when the CHO execution conditions corresponding to different PLMN information and/or AMF information of the candidate target cell are both met, the terminal device may determine the target PLMN and/or the target AMF based on the area in which the terminal device is currently located and a correspondence between each area covered by the candidate target cell and a PLMN and/or an AMF, to avoid a handover failure.

In a possible design of the first aspect, the method further includes: The terminal device sends a first message to a target network device, where the first message indicates that the terminal device has been successfully handed over to the target cell, and includes the target PLMN information and/or the target AMF information, and the target network device is a network device that manages the target cell.

In the foregoing technical solution, after the terminal device is successfully handed over to the target cell, the terminal device may further send, to the target network device, the first message indicating that the terminal device has been successfully handed over to the target cell, namely, the first message indicating that the handover is completed, so that the target network device releases an unnecessary CHO configuration, an unnecessary connection, or the like, to effectively improve resource utilization.

In a possible design of the first aspect, the first message further includes identification information of the target cell and/or index information corresponding to the target cell. This helps the target network device determine the target cell to which the terminal device is handed over.

In a possible design of the first aspect, when RACH resource information included in the first CHO configuration information is different from RACH resource information included in the second CHO configuration information, the first message may be encrypted by using a first key corresponding to the first CHO configuration information.

In a possible design of the first aspect, when RACH resource information included in the first CHO configuration information is the same as RACH resource information included in the second CHO configuration information, the terminal device may send two first messages to the target network device, where one of the first messages is encrypted by using a first key corresponding to the first CHO configuration information, and the other first message is encrypted by using a second key corresponding to the second CHO configuration information.

In the foregoing technical solution, the terminal device may encrypt the first message by using the key corresponding to the CHO configuration information, to improve security of the first message in a transmission process.

In a possible design of the first aspect, the first CHO configuration information includes first CHO execution condition information, and the first CHO execution condition information indicates the first CHO execution condition that is of the candidate target cell and that corresponds to the first PLMN information and/or the first AMF information, and includes one or more of signal quality-based execution condition information, time/timer-based execution condition information, or location-based execution condition information. The first PLMN information includes an identifier of a first PLMN, and the first AMF information includes an identifier of a first AMF, or includes an identifier of a first AMF and the identifier of the first PLMN. The second CHO configuration information includes second CHO execution condition information, and the second CHO execution condition information indicates the second CHO execution condition that is of the candidate target cell and that corresponds to the second PLMN information and/or the second AMF information, and includes one or more of signal quality-based execution condition information, time/timer-based execution condition information, or location-based execution condition information. The second PLMN information includes an identifier of a second PLMN, and the second AMF information includes an identifier of a second AMF, or includes an identifier of a second AMF and the identifier of the second PLMN.

In a possible design of the first aspect, the method further includes: The terminal device releases the second PLMN information and/or the second AMF information, and releases the second CHO configuration information and the second area information.

According to a second aspect, an embodiment of this application provides a communication method. The method may be performed by a source network device, or may be performed by a component (for example, a chip or a circuit) configured in the source network device. In the following descriptions of this application, an example in which the source network device performs the method is used for description.

The method may include: The source network device receives first information of a candidate target cell from a candidate target network device, where the first information includes first PLMN information and/or first AMF information, and includes second PLMN information and/or second AMF information; the first information further includes first CHO configuration information and first area information that correspond to the first PLMN information and/or the first AMF information, and includes second CHO configuration information and second area information that correspond to the second PLMN information and/or the second AMF information; and the first area information indicates a first area covered by the candidate target cell, and the second area information indicates a second area covered by the candidate target cell. The source network device sends the first information of the candidate target cell to a terminal device.

The foregoing technical solution provides a CHO mechanism applied when a cell that covers geographical areas of a plurality of countries or service areas of a plurality of operators is configured as the candidate target cell of the terminal device. If the candidate target cell supports a plurality of PLMNs and/or AMFs, the source network device may provide, for the terminal device during CHO configuration, CHO configuration information and area information that correspond to each PLMN and/or AMF, so that the terminal device can select, based on an area in which the terminal device is located, a target cell, and a target PLMN and/or a target AMF from cells that meet a CHO execution condition, to improve handover reliability.

In a possible design of the second aspect, the first CHO configuration information includes first CHO execution condition information, and the first CHO execution condition information indicates a first CHO execution condition that is of the candidate target cell and that corresponds to the first PLMN information and/or the first AMF information, and includes one or more of signal quality-based execution condition information, time/timer-based execution condition information, or location-based execution condition information. The first PLMN information includes an identifier of a first PLMN, and the first AMF information includes an identifier of a first AMF, or includes an identifier of a first AMF and the identifier of the first PLMN. The second CHO configuration information includes second CHO execution condition information, and the second CHO execution condition information indicates a second CHO execution condition that is of the candidate target cell and that corresponds to the second PLMN information and/or the second AMF information, and includes one or more of signal quality-based execution condition information, time/timer-based execution condition information, or location-based execution condition information. The second PLMN information includes an identifier of a second PLMN, and the second AMF information includes an identifier of a second AMF, or includes an identifier of a second AMF and the identifier of the second PLMN.

According to a third aspect, an embodiment of this application provides a communication method. The method may be performed by a target network device, or may be performed by a component (for example, a chip or a circuit) configured in the target network device. In the following descriptions of this application, an example in which the target network device performs the method is used for description.

The method may include: The target network device sends first information of a candidate target cell to a source network device, where the first information includes first PLMN information and/or first AMF information, and includes second PLMN information and/or second AMF information; the first information further includes first CHO configuration information and first area information that correspond to the first PLMN information and/or the first AMF information, and includes second CHO configuration information and second area information that correspond to the second PLMN information and/or the second AMF information; and the first area information indicates a first area covered by the candidate target cell, and the second area information indicates a second area covered by the candidate target cell. The target network device receives a first message from a terminal device if the terminal device determines the candidate target cell as a target cell, where the first message indicates that the terminal device has been successfully handed over to the target cell, and includes target PLMN information and/or target AMF information, and the target PLMN information and/or the target AMF information are/is the first PLMN information and/or the first AMF information, or are/is the second PLMN information and/or the second AMF information.

The foregoing technical solution provides a CHO mechanism applied when a cell that covers geographical areas of a plurality of countries or service areas of a plurality of operators is configured as the candidate target cell of the terminal device. If the candidate target cell supports a plurality of PLMNs and/or AMFs, a candidate target network device may provide, for the source network device during CHO preparation, CHO configuration information and area information that correspond to each PLMN and/or AMF, so that the terminal device determines, based on an area in which the terminal device is located, a target cell, and a target PLMN and/or a target AMF from cells that meet a CHO execution condition, to improve handover reliability.

In addition, when the terminal device determines the candidate target cell as the target cell, the target network device may determine, based on the first message, the target PLMN and/or the target AMF that are/is accessed by the terminal device, to release an unnecessary CHO configuration, an unnecessary connection, or the like for the terminal device. This effectively improves resource utilization.

In a possible design of the third aspect, when RACH resource information included in the first CHO configuration information is different from RACH resource information included in the second CHO configuration information, the target network device may determine, based on RACH resource information used by the terminal device to initiate a random access procedure, a first key for decrypting the first message, and decrypt the first message by using the first key.

In a possible design of the third aspect, when RACH resource information included in the first CHO configuration information is the same as RACH resource information included in the second CHO configuration information, the target network device may receive two first messages from the terminal device, and decrypt the two first messages by using a first key and/or a second key, where the first key is a key corresponding to the first CHO configuration information, and the second key is a key corresponding to the second CHO configuration information.

In the foregoing technical solution, the target network device may decrypt the first message by using the key corresponding to the CHO configuration information, to obtain information included in the first message. When different CHO configuration information includes different RACH resource information, the target network device may determine, based on the RACH resource information used by the terminal device to perform random access, the key for decrypting the first message. When different CHO configuration information includes same RACH resource information, because the terminal device separately sends a plurality of first messages that are respectively encrypted by using keys corresponding to the different CHO configuration information, the target network device can successfully decrypt the first message by using a key corresponding to any CHO configuration information.

In a possible design of the third aspect, the method further includes: The target network device sends a second message to a target AMF corresponding to the target AMF information, where the second message indicates, to the target AMF, that the terminal device has completed the handover. In this way, a CHO process is completed.

In a possible design of the third aspect, the method further includes: The target network device sends a third message to an AMF corresponding to AMF information other than the target AMF information in the first AMF information and the second AMF information, where the third message indicates the another AMF to release a connection established for the terminal device. This effectively improves resource utilization.

In a possible design of the third aspect, the third message includes a connection release cause value, and the connection release cause value is a location exception or AMF unavailability.

In a possible design of the third aspect, the first CHO configuration information includes first CHO execution condition information, and the first CHO execution condition information indicates a CHO execution condition that is of the candidate target cell and that corresponds to the first PLMN information and/or the first AMF information, and includes one or more of signal quality-based execution condition information, time/timer-based execution condition information, or location-based execution condition information; the first PLMN information includes an identifier of a first PLMN, and the first AMF information includes an identifier of a first AMF, or includes an identifier of a first AMF and the identifier of the first PLMN; the second CHO configuration information includes second CHO execution condition information, and the second CHO execution condition information indicates a CHO execution condition that is of the target cell and that corresponds to the second PLMN information and/or the second AMF information, and includes one or more of signal quality-based execution condition information, time/timer-based execution condition information, or location-based execution condition information; and the second PLMN information includes an identifier of a second PLMN, and the second AMF information includes an identifier of a second AMF, or includes an identifier of a second AMF and the identifier of the second PLMN.

### BRIEF DESCRIPTION OF DRAWINGS

FIG. 1a and FIG. 1b each are a schematic diagram of a network architecture of a satellite communication system to which an embodiment of this application is applicable;
FIG. 2 is a schematic diagram of a earth-fixed cell formed by a mobile satellite;
FIG. 3 is a schematic diagram of an earth moving cell formed by a mobile satellite;
FIG. 4 is a schematic flowchart of handover in a CHO mechanism;
FIG. 5 is a schematic diagram of a communication method according to an embodiment of this application;
FIG. 6 is a schematic diagram in which different areas covered by a candidate target cell correspond to different PLMNs according to an embodiment of this application;
FIG. 7 is an example diagram in which a source base station and a candidate target base station perform CHO preparation through directly connected communication interfaces according to an embodiment of this application;
FIG. 8 is an example diagram in which a source base station and a candidate target base station perform CHO preparation through forwarding by a core network device according to an embodiment of this application;
FIG. 9 is a schematic diagram of a specific example of a communication method according to an embodiment of this application;
FIG. 10 is a schematic diagram of a structure of a communication apparatus according to an embodiment of this application;
FIG. 11 is a schematic diagram of another structure of a communication apparatus according to an embodiment of this application;
FIG. 12 is a schematic diagram of a structure of another communication apparatus according to an embodiment of this application; and
FIG. 13 is a schematic diagram of another structure of another communication apparatus according to an embodiment of this application.

### DESCRIPTION OF EMBODIMENTS

To make objectives, technical solutions, and advantages of embodiments of this application clearer, the following further describes embodiments of this application in detail with reference to the accompanying drawings.

The technical solutions of embodiments of this application may be applied to various communication systems, such as a code division multiple access (code division multiple access, CDMA) system, a wideband code division multiple access (wideband code division multiple access, WCDMA) system, a general packet radio service (general packet radio service, GPRS) system, an LTE system, an LTE frequency division duplex (frequency division duplex, FDD) system, an LTE time division duplex (time division duplex, TDD) system, a universal mobile telecommunications system (universal mobile telecommunications system, UMTS), a 5th generation (5th generation, 5G) system, or an NR system, or may be applied to a future communication system, another similar communication system, or the like.

The technical solutions provided in embodiments of this application may be applied to a non-terrestrial network (NTN) communication system, or may be applied to a scenario in which an NTN and a terrestrial network (terrestrial network, TN) are deployed together. The NTN communication system may include a satellite communication system, a high altitude platform station (high altitude platform station, HAPS) communication system, or another non-terrestrial communication system.

The following uses an example in which the NTN communication system is a satellite communication system to describe in detail a network architecture to which this application is applied.

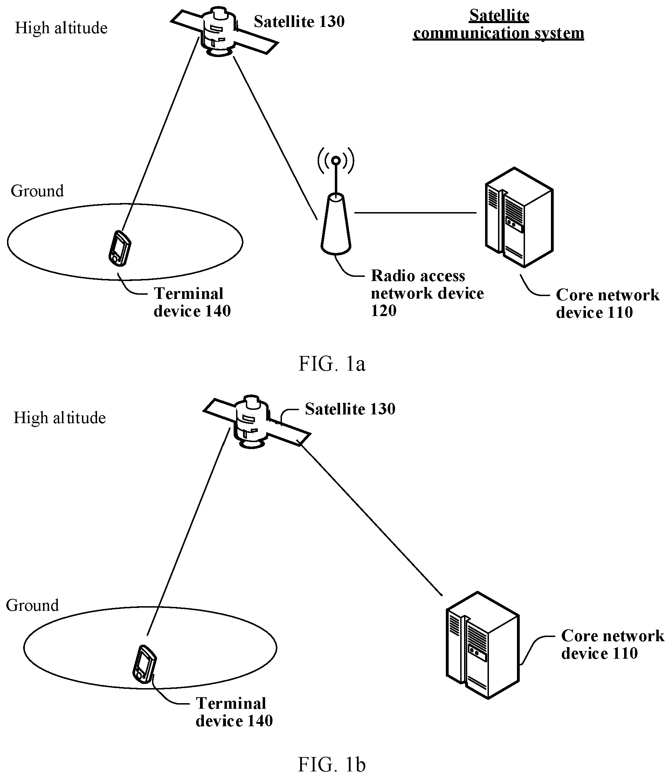

FIG. 1a is a schematic diagram of a network architecture of a satellite communication system to which an embodiment of this application is applicable. The network architecture includes a core network device 110, a radio access network device 120, a satellite 130, and at least one terminal device (for example, a terminal device 140 shown in FIG. 1a). In an example, the core network device, the radio access network device, and the terminal device in FIG. 1a are located on the ground, and the satellite is located at high altitude.

The radio access network device may communicate with the core network device in a wireless or wired manner. The core network device and the radio access network device may be different physical devices independent of each other, functions of the core network device and logical functions of the radio access network device may be integrated into one physical device, or a part of functions of the core network device and a part of functions of the radio access network device may be integrated into one physical device. It should be understood that the radio access network device described in embodiments of this application may correspond to different devices in different communication systems. For example, in a 5G system, the radio access network device corresponds to a 5G access network device, for example, a gNB or an ng-eNB; in a 4G system, the radio access network device corresponds to a 4G access network device, for example, an eNB or an en-gNB.

The satellite forwards a signal to implement communication between the radio access network device and the terminal device. To be specific, the satellite may receive a signal of the radio access network device and forward the signal to the ground to form a satellite cell, to provide service coverage for the terminal device on the ground. In this case, the satellite is equivalent to a relay node or a transponder. Therefore, this scenario may also be referred to as a transparent forwarding (transparent) form of the satellite.

In the transparent forwarding form, the satellite cell may be fixed on the ground (where the satellite cell may be denoted as a "fixed cell"), or may move on the ground with the satellite (where the satellite cell may be denoted as a "moving cell"). In a "fixed cell" scenario, the satellite cell is fixed on the ground. This means that coverage of the satellite cell on the ground is fixed, and may be fixed within a period of time, or may be permanently fixed. For example, for a geostationary earth orbit satellite, because the satellite remains stationary relative to the ground, a satellite cell formed by the satellite is also generally fixed relative to the ground. For a low-earth orbit satellite, because the satellite moves relative to the ground, the satellite may adjust a transmit angle of an antenna of the satellite or another physical parameter, so that a satellite cell formed by the satellite is fixed relative to the ground.

In a "moving cell" scenario, the satellite cell moves with the satellite. To be specific, when the satellite moves, the satellite cell also moves on the ground with the satellite. Generally, a reason for generating a moving cell is: As a satellite moves, the satellite does not dynamically adjust a beam direction. As a result, a projection on the ground that is of a beam generated by the satellite moves with the satellite.

It should be noted that an existence scenario of the moving cell is not specifically limited in embodiments of this application. When a satellite provides a service coverage area in the transparent forwarding form, a possible existence scenario of a moving cell may be as follows: The satellite establishes a connection to an original radio access network device; and as the satellite moves, a cell of the original radio access network device forwarded by the satellite moves with the satellite for a period of time. In other words, the satellite maintains the connection to the original radio access network device for a period of time. At a moment, the connection between the satellite and the original radio access network device is broken due to a long distance, a weak signal, or the like, and the satellite is connected to a new radio access network device. Then, the satellite starts to forward a signal of the new radio access network device, to form a new satellite cell. It may be understood that although the satellite keeps operating, a location of the radio access network device on the ground remains unchanged. Therefore, in a scenario in which there is a moving cell, if the satellite forwards a signal of a radio access network device on the ground, a formed satellite cell of the radio access network device moves in a specific range with the satellite, but the movement range of the satellite cell usually surrounds the radio access network device.

FIG. 1b is a schematic diagram of another network architecture of a satellite communication system to which an embodiment of this application is applicable. The network architecture includes a core network device 110, a satellite 130, and at least one terminal device (for example, a terminal device 140 shown in FIG. 1b). In an example, the core network device and the terminal device in FIG. 1b are located on the ground, and the satellite is located at high altitude.

A difference from the network architecture shown in FIG. 1a lies in that a radio access network device, for example, a base station, may be deployed on the satellite in the network architecture shown in FIG. 1b. The satellite may generate a cell signal, and forward the cell signal to the ground to form a satellite cell, to provide a service coverage area for the terminal device on the ground. Therefore, this scenario may also be referred to as a regenerative (regenerative) form of the satellite.

In the regenerative form, the satellite cell moves with the satellite. To be specific, when the satellite moves, the cell generated by the satellite also moves accordingly on the ground. Therefore, the satellite cell may be referred to as a "moving cell". Because the "moving cell" is generated by the satellite, the "moving cell" of the satellite may move on the ground with an orbit of the satellite. Generally, after the satellite moves away, a new satellite comes subsequently, to ensure continuous coverage as much as possible. A coverage area of the new satellite may be the same as or different from that of the previous satellite. It may be understood that due to different operation directions, beam transmitting directions, and beam transmitting capabilities of the satellites, the coverage areas of the two satellites on the ground may not be completely the same.

Although FIG. 1a and FIG. 1b each show only one terminal device, it should be understood that one radio access network device, one satellite, or one core network device may serve one or more terminal devices. Quantities of core network devices, radio access network devices, satellites, and terminal devices included in the satellite communication system are not limited in embodiments of this application. In addition, the terminal device may be at a fixed location, or may be movable. This is not limited in this application.

Communication between a radio access network device and a terminal device and communication between terminal devices may be performed on a licensed spectrum (licensed spectrum), on an unlicensed spectrum (unlicensed spectrum), or on both a licensed spectrum and an unlicensed spectrum. The communication between a radio access network device and a terminal device and the communication between terminal devices may be performed on a spectrum below 6 gigahertz (gigahertz, GHz), on a spectrum above 6 GHz, or on both a spectrum below 6 GHz and a spectrum above 6 GHz. A spectrum resource used between the radio access network device and the terminal device is not limited in embodiments of this application.

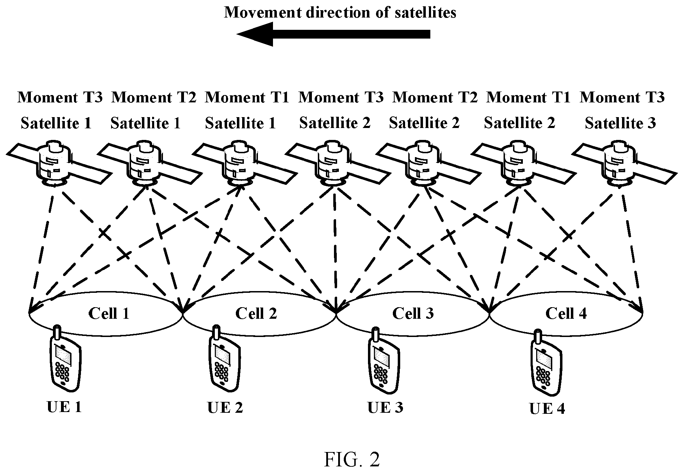

FIG. 2 is a schematic diagram of a earth-fixed cell formed by a mobile satellite. The figure shows an ideal scenario, namely, a scenario in which the earth cell is completely fixed. After a satellite moves away, another satellite completely covers a cell area previously covered by the satellite. A mapping manner of the earth-fixed cell means: A location of the cell remains unchanged on the ground, and the mobile satellite may adjust beams of the mobile satellite to form these cells. It should be understood that, when a satellite cell is a earth-fixed cell, the mobile satellite may provide a service coverage area in a transparent forwarding form.

For example, at a moment T1, a cell 1 and a cell 2 are covered by a beam of a satellite 1, and a cell 3 and a cell 4 are covered by a beam of a satellite 2. At a moment T2, although both the satellite 1 and the satellite 2 move leftwards, the satellite 1 and the satellite 2 can still ensure coverage of the cell 1, the cell 2, the cell 3, and the cell 4 by adjusting the beams of the satellite 1 and the satellite 2. The satellite 1 and the satellite 2 have moved by a sufficient distance in a period of time from the moment T1 to a moment T3. At the moment T3, the satellite 1 cannot provide the coverage for the cell 2 by adjusting the beam, and the satellite 2 cannot provide the coverage for the cell 4 by adjusting the beam either. In this case, the satellite 2 may provide the coverage for the cell 2, and a satellite 3 may provide the coverage for the cell 4.

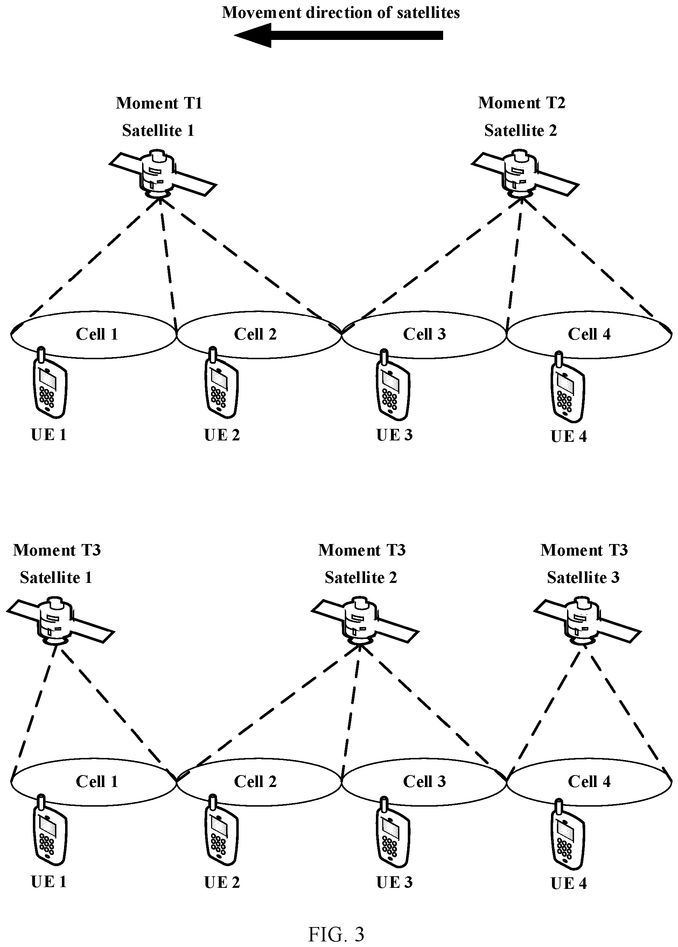

FIG. 3 is a schematic diagram of an earth moving cell formed by a mobile satellite. In this example, a mapping manner of the earth moving cell means: The mobile satellite does not dynamically adjust a beam direction of the mobile satellite, and a beam generated by a base station moves on the ground with the satellite/base station. It should be understood that, when a satellite cell is an earth moving cell, the mobile satellite may provide a service coverage area in a transparent forwarding form or a regenerative form.

For example, at a moment T1, an area is covered by a cell 1 and a cell 2 that are formed by a satellite 1 and a cell 3 and a cell 4 that are formed by a satellite 2. Because the cell 1, the cell 2, the cell 3, and the cell 4 move with the satellite 1 and the satellite 2, at a moment T3, the area is covered by the cell 2 formed by the satellite 1, the cell 3 and the cell 4 formed by the satellite 2, and a cell 5 formed by a satellite 3 that newly comes.

The network architectures and service scenarios described in embodiments of this application are intended to describe the technical solutions in embodiments of this application more clearly, and do not constitute a limitation on the technical solutions provided in embodiments of this application. A person of ordinary skill in the art may know that, with evolution of the communication network architectures and emergence of new service scenarios, the technical solutions provided in embodiments of this application are also applicable to similar technical problems.

The following describes some terms in embodiments of this application, to help a person skilled in the art have a better understanding.
(1) A terminal device in embodiments of this application is a device having a wireless transceiver function, and may be deployed on land, including an indoor or outdoor device, a handheld device, a wearable device, or a vehicle-mounted device, may be deployed on water (for example, on a ship), or may be deployed in the air (for example, on a plane, a balloon, and a satellite). The terminal device may communicate with a core network through a radio access network (radio access network, RAN), and exchange a voice and/or data with the RAN. The terminal device may be a mobile phone (mobile phone), a tablet computer (Pad), a computer having a wireless transceiver function, a mobile Internet device (mobile internet device, MID), a wearable device, a virtual reality (virtual reality, VR) terminal device, an augmented reality (augmented reality, AR) terminal device, a wireless terminal in industrial control (industrial control), a wireless terminal in self driving (self driving), a wireless terminal in telemedicine (telemedicine), a wireless terminal in a smart grid (smart grid), a wireless terminal in transportation safety (transportation safety), a wireless terminal in a smart city (smart city), a wireless terminal in a smart home (smart home), or the like. An application scenario is not limited in embodiments of this application. The terminal device may also be sometimes referred to as user equipment (user equipment, UE), a mobile station, a remote station, and the like. A specific technology, a device form, and a name that are used by the terminal device are not limited in embodiments of this application.

By way of example and not limitation, the terminal device in embodiments of this application may alternatively be a wearable device. The wearable device may also be referred to as a wearable intelligent device, an intelligent wearable device, or the like, and is a general term of wearable devices, such as glasses, gloves, watches, clothes, and shoes, that are developed by applying wearable technologies to intelligent designs of daily wear. The wearable device is a portable device that is directly worn on the body or integrated into clothes or an accessory of a user. The wearable device is not only a hardware device, but also implements powerful functions through software support, data exchange, and cloud interaction. In a broad sense, wearable intelligent devices include full-featured and large-sized devices that can implement all or a part of functions without depending on smartphones, for example, smart watches or smart glasses, and include devices that focus on only one type of application function and need to collaboratively work with other devices such as smartphones, for example, various smart bands, smart helmets, or smart jewelry for monitoring physical signs.

The terminal device in embodiments of this application may alternatively be an in-vehicle module, an onboard component, an automotive chip, or an on board unit that is built in a vehicle as one or more components or units. The vehicle may implement a method in this application by using the in-vehicle module, the onboard component, the automotive chip, or the on board unit that is built in the vehicle.

(2) A radio access network device in embodiments of this application is a device that is in a network and that enables a terminal device to access a wireless network. The radio access network device may be a node in a radio access network, where the node may also be referred to as a base station and a RAN node. In this application, the radio access network device is a radio access network device deployed on the ground or on a satellite. In the following descriptions, the radio access network device may be referred to as an access network device or a network device for short.

The access network device may include an evolved NodeB (NodeB, eNB, or e-NodeB, evolved NodeB), for example, a conventional macro eNB and a micro eNB in a heterogeneous network scenario, in an LTE system or an LTE-advanced system (LTE-Advanced, LTE-A) system, may include a next generation NodeB (next generation nodeB, gNB) in a 5G system or an NR system, may include a radio network controller (radio network controller, RNC), a NodeB (NodeB, NB), a base station controller (base station controller, BSC), a base transceiver station (base transceiver station, BTS), a transmission reception point (transmission reception point, TRP), a home base station (for example, a home evolved NodeB or a home NodeB, HNB), a baseband unit (baseband unit, BBU), a BBU pool, a wireless fidelity (wireless fidelity, Wi-Fi) access point (access point, AP), an integrated access and backhaul (integrated access and backhaul, IAB) node, or the like, or may include a central unit (central unit, CU) and/or a distributed unit (distributed unit, DU) in a cloud radio access network (cloud radio access network, CloudRAN) system. This is not limited in embodiments of this application.

For example, in a network structure, a network device may be a CU node, a DU node, or an access network device including a CU node and a DU node. Further, the CU node may be divided into a control plane (CU-CP) and a user plane (CU-UP). The CU-CP is responsible for control plane functions, and mainly includes a radio resource control (radio resource control, RRC) layer and a packet data convergence protocol (packet data convergence protocol, PDCP)-C layer. The PDCP-C is mainly responsible for encryption and decryption, integrity protection, data transmission, and the like of control plane data. The CU-UP is responsible for user plane functions and mainly includes SDAP and PDCP-U. The SDAP is mainly responsible for processing data of a core network and mapping a flow (flow) to a bearer (bearer). The PDCP-U is mainly responsible for encryption and decryption, integrity protection, header compression, sequence number maintenance, data transmission, and the like on a data plane. The CU-CP may be connected to the CU-UP through an E1 interface. On behalf of the CU, the CU-CP is connected to the core network through an NG interface, and is connected to the DU through an F1-C interface (the control plane). The CU-UP is connected to the DU through an F1-U interface (the user plane). Certainly, in another possible implementation, the PDCP-C is on the CU-UP.

(3) A core network device in embodiments of this application is a device that is in a core network (core network, CN) and that provides service support for a terminal device. Currently, some examples of the core network device include an AMF entity, a session management function (session management function, SMF) entity, a user plane function (user plane function, UPF) entity, and the like. The AMF entity is responsible for access management and mobility management of the terminal device. The SMF entity is responsible for session management, for example, user session establishment. The UPF entity is a user plane functional entity, and is mainly responsible for connecting to an external network. It should be noted that an entity in this application may also be referred to as a network element or a functional entity. In other words, the AMF entity may also be referred to as an AMF network element or an AMF functional entity, and the SMF entity may also be referred to as an SMF network element or an SMF functional entity. In the following descriptions of this application, the core network device may be the AMF.

(4) A satellite in embodiments of this application is a network device on the satellite. For ease of description, the "network device on the satellite" may be referred to as the "satellite" for short. The satellite may be a low-earth orbit (low-earth orbit, LEO) satellite, a medium-earth orbit satellite, or another network device moving at high altitude. Generally, based on satellite orbit altitudes, there are the following three types of satellites in a satellite communication system: a geostationary earth orbit (geostationary earth orbit, GEO) satellite, a low-earth orbit (LEO) satellite, and a medium-earth orbit satellite. The geostationary earth orbit satellite may also be referred to as a static satellite. The geostationary earth orbit satellite operates at a same speed as rotation of the earth, and therefore remains stationary relative to the ground. Correspondingly, a satellite cell formed by the geostationary earth orbit satellite is also stationary. The low-earth orbit satellite may also be referred to as a near-earth orbit satellite. The low-earth orbit satellite moves fast relative to the ground. Therefore, a satellite cell formed by the low-earth orbit satellite may move with the satellite. The medium-earth orbit satellite is a satellite whose orbit height falls between an orbit height of the geostationary earth orbit satellite and an orbit height of the low-earth orbit satellite.

(5) It should be noted that terms "system" and "network" in embodiments of this application may be used interchangeably. The term "a plurality of" means two or more. In view of this, "a plurality of" may also be understood as "at least two" in embodiments of this application. The term "at least one" may be understood as one or more, for example, understood as one, two, or more. For example, "including at least one" means including one, two, or more, and does not limit which items are included. For example, if at least one of A, B, and C is included, A, B, C, A and B, A and C, B and C, or A, B, and C may be included. Similarly, understanding of descriptions such as "at least one type" is similar. The term "and/or" describes an association relationship between associated objects and represents that three relationships may exist. For example, A and/or B may represent the following three cases: Only A exists, both A and B exist, and only B exists. In addition, unless otherwise specified, the character "/" generally indicates an "or" relationship between associated objects.

Unless otherwise stated, ordinal numbers such as "first" and "second" in embodiments of this application are used to distinguish between a plurality of objects, but are not intended to limit a sequence, a time sequence, priorities, or importance of the plurality of objects. In addition, descriptions of "first" and "second" do not necessarily indicate that objects are different.

A cell in embodiments of this application may be an NTN cell. The following describes the cell in this application in detail by using an example in which the NTN cell is a satellite cell.

The satellite cell further has an important feature, namely, large coverage, in addition to the foregoing mobility-related feature. A coverage diameter of a satellite cell may reach dozens of kilometers to 1000-odd kilometers. Therefore, a satellite cell may cover geographical areas of a plurality of countries or service areas of a plurality of operators. Generally, a satellite may broadcast information about a plurality of PLMNs (such as identification information of the PLMNs) and/or information about a plurality of AMFs (such as identification information of the AMFs) to indicate that the satellite can support services of a plurality of countries/operators. A terminal device may determine an appropriate PLMN and/or AMF based on a location of the terminal device and a mapping relationship between information about an area covered by a cell and a PLMN and/or an AMF, to access the PLMN and/or AMF.

For example, a cell C covers geographical areas of a country A and a country B. The country A corresponds to a PLMN 1 and/or an AMF 1, and the country B corresponds to a PLMN 2 and/or an AMF 2. In this case, the cell C may broadcast information about the PLMN 1 and/or the AMF 1 and information about the PLMN 2 and/or the AMF 2. It may be understood that, that the country A corresponds to a PLMN 1 and/or an AMF 1 means that a PLMN that is deployed by the country A and that manages the cell C is the PLMN 1, and/or an AMF connected to an access network device to which the cell C belongs is the AMF 1; and that the country B corresponds to a PLMN 2 and/or an AMF 2 means that a PLMN that is deployed by the country B and that manages the cell C is the PLMN 2, and/or an AMF connected to an access network device to which the cell C belongs is the AMF 2.

In this way, UE 1 located in the country A and within coverage of the cell C may access the cell C via the PLMN 1 and/or the AMF 1. In other words, the UE 1 may access the cell C via the PLMN 1 and/or the AMF1 when needing to access the cell C; when needing to access the cell C, the UE 1 may access a cell corresponding to the PLMN 1 and/or the AMF 1; or when the UE 1 needs to access the cell C, a core network device connected to an access network device that may be accessed by the UE 1 is the AMF 1, and the access network device that may be accessed by the UE 1 belongs to the PLMN 1.

Similarly, UE 2 located in the country B and within the coverage of the cell C may access the cell C via the PLMN 2 and/or the AMF 2. In other words, the UE 2 may access the cell C via the PLMN 2 and/or the AMF 2 when needing to access the cell C; when needing to access the cell C, the UE 2 may access a cell corresponding to the PLMN 2 and/or the AMF 2; or when the UE 2 needs to access the cell C, a core network device connected to an access network device that may be accessed by the UE 2 is the AMF 2, and the access network device that may be accessed by the UE 2 belongs to the PLMN 2.

As different countries or operators have different communication policies, a satellite cell may be divided at a finer granularity. For example, an entire service coverage area of the satellite cell is divided into a plurality of areas with regular or irregular shapes, to better match geographical areas of the different countries or service areas of the different operators, where the plurality of areas may be referred to as virtual cells or virtual areas. Different areas covered by a same satellite cell may correspond to different PLMNs and/or AMFs, so that a plurality of virtual cells are formed within coverage of the same satellite cell, and mobility of a terminal device can be effectively managed based on the different areas.

Embodiments of this application may be further applied to a cell handover scenario. A terminal device may be handed over from a source network device to a target network device due to a location change, a service change, a network coverage change, or another factor. The source network device is a network device accessed by the terminal device before handover, namely, a network device that serves the terminal device before handover. The target network device is a network device to which the terminal device needs to be handed over, namely, a network device accessed by the terminal device after the handover succeeds or a network device that serves the terminal device after the handover succeeds. Correspondingly, a source cell is a cell accessed by the terminal device before the handover. The source cell is a cell covered by the source network device, namely, a cell managed by the source network device, in other words, the source cell belongs to the source network device. A target cell is a cell accessed by the terminal device after the handover. The target cell is a cell covered by the target network device, namely, a cell managed by the target network device, in other words, the target cell belongs to the target network device.

To effectively improve handover reliability, the cell handover may be CHO. In a CHO mechanism, a network (for example, the source network device) may configure one or more candidate target cells for the terminal device, where the candidate target cell may also be referred to as a candidate cell for short. If the network configures a plurality of candidate target cells for the terminal device, the network may send, to the terminal device by using one or more RRC messages, CHO configuration information respectively corresponding to the plurality of candidate target cells. The RRC message may be a newly defined message (for example, CondRRCReconfiguration, or have another naming/expression form, where this is not limited), or an existing RRC message (for example, an RRC reconfiguration message) may be reused as the RRC message.

The source network device may send the RRC message to the terminal device when signal quality on a source link is good. The RRC message may include CHO configuration information corresponding to at least one candidate target cell. CHO configuration information corresponding to one candidate target cell may include CHO execution condition information and related information of the candidate target cell.

The related information of the candidate target cell may include one or more of the following information: a cell radio network temporary identifier (cell radio network temporary identifier, C-RNTI) allocated by the candidate target cell to the terminal device, random access channel (random access channel, RACH) resource information for accessing the candidate target cell, index information corresponding to the candidate target cell (for example, a measurement identifier measID corresponding to the cell and/or a CHO reconfiguration identifier CondReconfigId corresponding to the cell), a cell global identifier (cell global identifier, CGI) of the candidate target cell, a physical cell identifier (physical cell identifier, PCI) of the candidate target cell, frequency information corresponding to the candidate target cell, a physical layer configuration parameter corresponding to the candidate target cell, a media access control (media access control, MAC) layer configuration parameter corresponding to the candidate target cell, a radio link control (radio link control, RLC) layer configuration parameter corresponding to the candidate target cell, a packet data convergence (packet data convergence, PDCP) layer configuration parameter corresponding to the candidate target cell, a service data adaptation protocol (service data adaptation protocol, SDAP) layer configuration parameter corresponding to the candidate target cell, an RRC layer configuration parameter corresponding to the candidate target cell, and the like. The frequency information of the candidate target cell may include one or more of the following: absolute frequency (for example, absoluteFrequencySSB) of a synchronization signal block (synchronization signal block, SSB), an absolute frequency location (for example, absoluteFrequencyPointA) of a common resource block (a common RB 0), a frequency bandwidth list (for example, frequencyBandList), and a subcarrier spacing (subcarrier spacing, SCS)-specific carrier list (for example, scs-SpecificCarrierList).

The CHO execution condition information indicates a CHO execution condition corresponding to the candidate target cell, where the CHO execution condition may also be referred to as a CHO trigger condition. Using a cell signal quality-based CHO execution condition as an example (in other words, a trigger quantity (trigger quantity) in the CHO execution condition is cell signal quality), the CHO execution condition information may include a CHO execution event type and a corresponding threshold. The CHO execution event type may include an event A3, an event A4, an event A5, an event B1, an event B2, another execution event type, or the like.

One or more CHO execution conditions may be configured for one candidate target cell. For example, one execution event type may be configured for one candidate target cell, but a maximum of two different trigger quantities and at least two different thresholds for each trigger quantity are configured for the candidate target cell. The trigger quantity is the cell signal quality, and may include, for example, one or more of reference signal received power (reference signal received power, RSRP), reference signal received quality (reference signal received quality, RSRQ), and a signal to interference plus noise ratio (signal to interference plus noise ratio, SINR). Alternatively, at least two different execution event types and thresholds corresponding to the execution event types may be configured for one candidate target cell. CHO execution event types respectively corresponding to different candidate target cells and/or thresholds corresponding to the execution event types may be the same or different. This is not limited.

It may be understood that the source cell, the target cell, or the candidate target cell in embodiments of this application may be the NTN cell described above, for example, the satellite cell. To be specific, a service coverage area of the source cell, the target cell, or the candidate target cell may be divided into a plurality of areas, and different areas may correspond to different PLMNs and/or different AMFs to form different virtual cells.

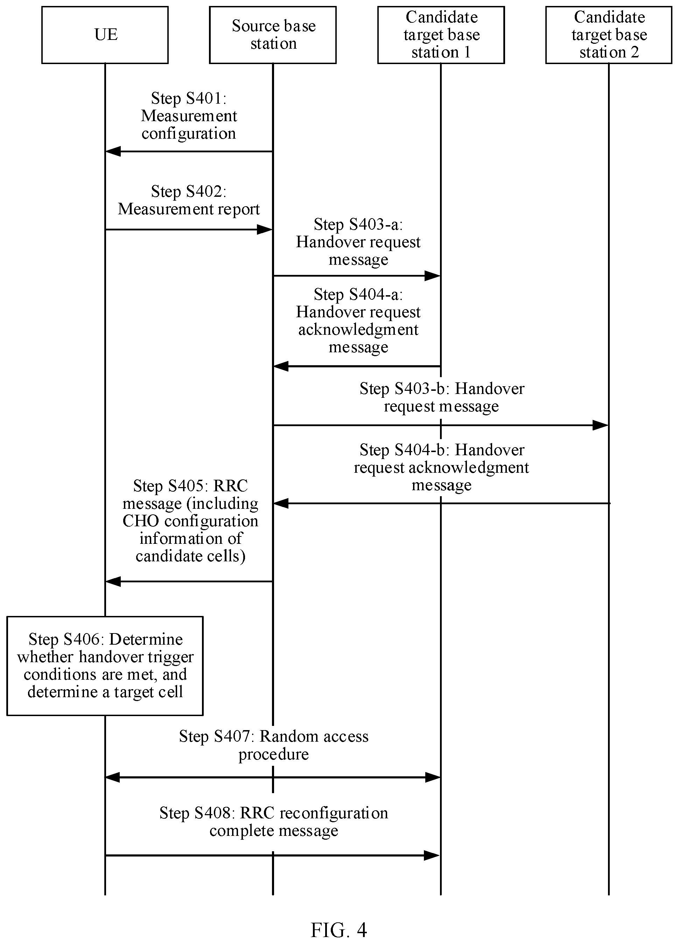

FIG. 4 shows an example of a handover procedure in the CHO mechanism. In this example, a source base station configures two candidate target cells for UE. and the two candidate target cells are respectively managed by a candidate target base station 1 and a candidate target base station 2. The handover procedure may include the following steps: In step S401, the source base station delivers a measurement configuration to the UE. In step S402, the source base station correspondingly receives a measurement report reported by the UE. In step S403-a and step S404-a, the source base station and the candidate target base station 1 perform CHO preparation. The source base station may send a handover request message to the candidate target base station 1, and receive a handover request acknowledgment message from the candidate target base station 1, where the handover request acknowledgment message may include CHO configuration information of a candidate target cell 1. In step S403-b and step S404-b, the source base station and the candidate target base station 2 perform CHO preparation. The source base station may send a handover request message to the candidate target base station 2, and receive a handover request acknowledgment message from the candidate target base station 2, where the handover request acknowledgment message may include CHO configuration information of a candidate target cell 2. In step S405, the source base station may send an RRC message to the UE, where the RRC message includes the CHO configuration information respectively corresponding to the candidate target cell 1 and the candidate target cell 2. Further, in step S406, after receiving the RRC message, the UE may determine, based on the CHO configuration information of the candidate target cell 1 and the candidate target cell 2, whether respective CHO execution conditions of the candidate target cell 1 and the candidate target cell 2 are met, and use a cell that meets the CHO execution condition in the candidate target cell 1 and the candidate target cell 2 as a target cell. Subsequently, the UE may initiate random access to a base station to which the target cell belongs, to access the target cell. Assuming that the UE determines the candidate target cell 1 as the target cell, in step S407, the UE may perform a random access procedure with the candidate target base station 1 (namely, a target base station). After the random access procedure succeeds, in step S408, the UE may send an RRC reconfiguration complete message to the candidate target base station 1 (namely, the target base station). It may be understood that after the UE determines the candidate target cell 1 as the target cell, the candidate target base station may also be referred to as the target base station. It should be noted that FIG. 4 shows only an example of a CHO procedure, and the CHO procedure may have another variation. This is not limited in this application. The steps in FIG. 4 may be optional, and an execution sequence of the steps may be changed.

Specifically, the UE may determine, based on the CHO configuration information, whether the CHO execution condition is met. In an example, it is assumed that a CHO execution event type configured for the candidate target cell 1 is the event A3, a trigger quantity configured for the candidate target cell 1 is the cell signal quality, and a corresponding threshold configured for the candidate target cell 1 is a first threshold. In this case, when the cell signal quality of the candidate target cell 1 is greater than cell signal quality of a serving cell by the first threshold, it may be considered that the candidate target cell 1 meets the CHO execution condition, and the candidate target cell 1 may be determined as the target cell. It should be noted that the signal quality may include one or more of the RSRP, the RSRQ, and the SINR. For example, the signal quality may include the RSRP and the RSRQ, include the RSRP and the SINR, or include another parameter. This is not limited. When the signal quality includes a plurality of parameters, it may be considered that each of the parameters is a separate trigger quantity. For example, when the signal quality includes the RSRP and the RSRQ, it may be considered that the RSRP is a trigger quantity, and the RSRQ is another trigger quantity. Different trigger quantities may correspond to a same first threshold or different first thresholds. This is not limited. Specifically, for the candidate target cell 1, the event A3 and two trigger quantities, namely, the RSRP and the RSRQ, are configured, a configured first threshold corresponding to the RSRP is E, and a configured first threshold corresponding to the RSRQ is F. In this case, when the RSRP of the candidate target cell 1 is greater than RSRP of the serving cell by E, and the RSRQ of the candidate target cell 1 is greater than RSRQ of the serving cell by F, it may be considered that the candidate target cell 1 meets the CHO execution condition, and the candidate target cell 1 may be determined as the target cell.

In another example, it is assumed that a CHO execution event type configured for the candidate target cell 1 is the event A5, a trigger quantity configured for the candidate target cell 1 is the cell signal quality, and corresponding thresholds configured for the candidate target cell 1 are a second threshold and a third threshold. In this case, when the cell signal quality of the candidate target cell 1 is greater than the second threshold, and cell signal quality of a serving cell is less than the third threshold, it may be considered that the candidate target cell 1 meets the CHO execution condition, and the candidate target cell 1 may be determined as the target cell.

In another example, it is assumed that CHO execution event types configured for the candidate target cell 1 are the event A3 and the event A5, a trigger quantity configured for the event A3 is the RSRP, a corresponding threshold configured for the event A3 is a first threshold, a trigger quantity configured for the event A5 is the RSRQ, and corresponding thresholds configured for the event A5 are a second threshold and a third threshold. In this case, when the RSRP of the candidate target cell 1 is greater than RSRP of a serving cell by the first threshold, the RSRQ of the candidate target cell 1 is greater than the second threshold, and RSRQ of the serving cell is less than the third threshold, it may be considered that the candidate target cell 1 meets the CHO execution condition, and the candidate target cell 1 may be determined as the target cell.

It should be noted that the foregoing example is merely provided for description, and embodiments of this application are not limited thereto.

Considering that there is a long propagation delay in NTN communication, a handover failure may occur, and therefore a distinct gain is achieved by using the CHO mechanism in an NTN communication system. In the NTN communication system, because a satellite moves with a regular track, a network device may learn of an ephemeris, for example, a cell/base station that serves a terminal device at a specific geographical location or a cell/base station that serves the terminal device in a specific period of time. Therefore, a criterion for determining, based on time information and location information, whether a CHO execution condition is met may be introduced into the CHO mechanism in the NTN communication system.

Specifically, the CHO mechanism in the NTN communication system may include the following three types of CHO execution condition information:
(1) Signal quality-based CHO execution condition information: may include a CHO execution event type and a corresponding threshold. For details, refer to the foregoing related descriptions of the CHO execution condition information.
(2) Location-based CHO execution condition information: may be geographical location information. For example, in an implementation, the geographical location information may be geographical location information of the terminal device on the ground. For example, the CHO execution condition information may include a longitude and latitude value. The longitude and latitude value may be for determining a specific area or a specific fixed point. The terminal device may perform handover when a geographical location of the terminal device meets a longitude and latitude requirement, for example, when the terminal device moves into the area or to the fixed point indicated by the longitude and latitude value. Alternatively, in another implementation, the geographical location information may be a distance between the terminal device and the satellite. For example, the CHO execution condition information may include a distance threshold. The UE may perform handover when the distance between the terminal device and the satellite reaches the threshold. Alternatively, in still another implementation, the geographical location information may be global positioning system (global positioning system, GPS) information, a timing advance (timing advance, TA), or other information. In this implementation, one candidate target cell may correspond to one or more pieces of CHO execution condition information, and the candidate cell has corresponding related information (namely, related information of the candidate target cell). Different candidate target cells may correspond to same or different CHO execution condition information. This is not limited.
(3) Time/timer-based CHO execution condition information: may be time information. For example, in an implementation, the CHO execution condition information may be an absolute time value, for example, a specific moment value (for example, coordinated universal time (coordinated universal time, UTC) 12:00) or a specific time period value (for example, UTC 12:00 to UTC 13:00). In other words, the terminal device may perform handover when the absolute time arrives. Alternatively, in another implementation, the CHO execution condition information may be a relative time value, for example, effective duration of a timer. To be specific, the timer is started after the terminal device receives an RRC message including CHO configuration information, and the terminal device may perform handover when the effective duration of the timer expires. In this implementation, one candidate cell may correspond to one or more pieces of CHO execution condition information, and the candidate target cell has corresponding related information (namely, related information of the candidate target cell). Different candidate target cells may correspond to same or different CHO execution condition information.

When performing CHO configuration, a network may configure at least one of the foregoing three types of CHO execution condition information as the CHO execution condition information. For example, the CHO execution event type, the corresponding threshold, and the absolute time value may be configured as the CHO execution condition information. When the absolute time arrives and signal quality of a corresponding candidate target cell meets the condition, the terminal device may determine the candidate target cell as the target cell, and perform handover.

It may be understood that, in embodiments of this application, the terminal device and/or the network device may perform a part or all of steps in embodiments of this application. These steps or operations are merely examples. In embodiments of this application, other operations or variations of various operations may be further performed. In addition, the steps may be performed in a sequence different from a sequence presented in embodiments of this application, and it is possible that not all operations in embodiments of this application need to be performed.

A PLMN and an AMF entity are used as an example to describe the method in embodiments of this application. However, embodiments of this application are not limited to the PLMN and the AMF entity. Alternatively, the PLMN may be another communication network, and the AMF entity may be another entity or device that can implement a mobility management function or an entity or a device that implements a similar function in the communication network.

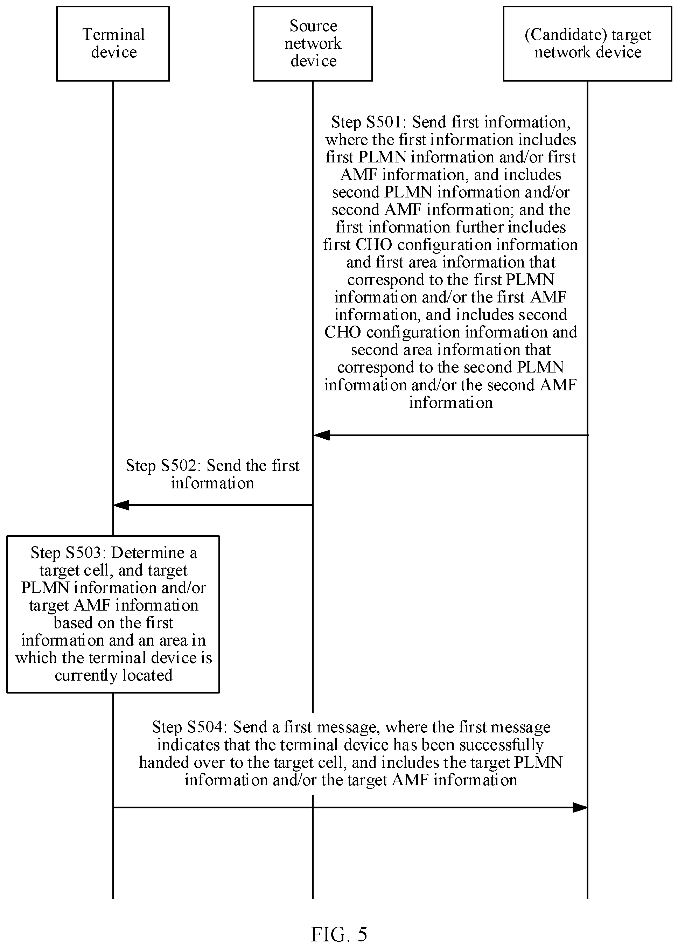

FIG. 5 is a schematic flowchart of a communication method according to an embodiment of this application. The method includes the following steps.

Step S501: A candidate target network device sends first information of a candidate target cell to a source network device, where the first information includes first PLMN information and/or first AMF information, and includes second PLMN information and/or second AMF information; the first information further includes first CHO configuration information and first area information that correspond to the first PLMN information and/or the first AMF information, and includes second CHO configuration information and second area information that correspond to the second PLMN information and/or the second AMF information; and the first area information indicates a first area covered by the candidate target cell, and the second area information indicates a second area covered by the candidate target cell.

Correspondingly, the source network device may receive the first information of the candidate target cell from the candidate target network device.

Specifically, content of the first information may be in the following plurality of possible cases:
(1) The first information includes the first PLMN information, the second PLMN information, the first CHO configuration information and the first area information that correspond to the first PLMN information, and the second CHO configuration information and the second area information that correspond to the second PLMN information.
(2) The first information includes the first AMF information, the second AMF information, the first CHO configuration information and the first area information that correspond to the first AMF information, and the second CHO configuration information and the second area information that correspond to the second AMF information.
(3) The first information includes the first PLMN information, the first AMF information, the second PLMN information, the second AMF information, the first CHO configuration information and the first area information that correspond to the first PLMN information and the first AMF information, and the second CHO configuration information and the second area information that correspond to the second PLMN information and the second AMF information.
(4) The first information includes the first PLMN information, the second AMF information, the first CHO configuration information and the first area information that correspond to the first PLMN information, and the second CHO configuration information and the second area information that correspond to the second AMF information.
(5) The first information includes the first AMF information, the second PLMN information, the first CHO configuration information and the first area information that correspond to the first AMF information, and the second CHO configuration information and the second area information that correspond to the second PLMN information.

To clearly describe various possible representation forms of the content included in the first information, the following describes the method provided in this application by using an example in which the first information includes the first PLMN information and/or the first AMF information and includes the second PLMN information and/or the second AMF information.

Step S502: The source network device sends the first information of the candidate target cell to a terminal device.

Correspondingly, the terminal device may receive the first information of the candidate target cell from the source network device.

In this embodiment of this application, the candidate target cell is a cell that supports the first PLMN information and/or the first AMF information and supports the second PLMN information and/or the second AMF information, and the candidate target network device is a network device that manages the candidate target cell. In a transparent forwarding form, the network device is a radio access network device on the ground. In a regenerative form, the network device is a radio access network device deployed on a satellite or the satellite. The satellite has a function of the radio access network device, in other words, the radio access network device is built in the satellite.

The first PLMN information indicates a first PLMN, and the second PLMN information indicates a second PLMN. In other words, the first PLMN information corresponds to a first PLMN, and the second PLMN information corresponds to a second PLMN. For example, the first PLMN information may include an identifier of the first PLMN, and the second PLMN information may include an identifier of the second PLMN. In other words, PLMN information in embodiments of this application may be indicated by an identifier (for example, a PLMN-identifier) of a PLMN. Similarly, the first AMF information indicates a first AMF, and the second AMF information indicates a second AMF. In other words, the first AMF information corresponds to a first AMF, and the second AMF information corresponds to a second AMF. For example, the first AMF information may include an identifier of the first AMF, or include an identifier of the first AMF and the identifier of the first PLMN; the second AMF information may include an identifier of the second AMF, or include an identifier of the second AMF and the identifier of the second PLMN. In other words, AMF information in embodiments of this application may be identified by an identifier (for example, an AMF-identifier) of an AMF or a combination of an identifier (for example, an AMF-identifier) of an AMF and an identifier (for example, a PLMN-identifier) of a PLMN.

For example, the candidate target cell may be a cell that can cover geographical areas of a plurality of countries or service areas of a plurality of operators. For example, the candidate target cell may cover geographical areas of a country A (or an operator A) and a country B (or an operator B), where the country A (or the operator A) may correspond to the first PLMN or the first AMF, and the country B (or the operator B) may correspond to the second PLMN or the second AMF. In other words, a PLMN and an AMF that are deployed by the country A (or the operator A) and that manage the candidate target cell are respectively the first PLMN and the first AMF; a PLMN and an AMF that are deployed by the country B (or the operator B) and that manage the candidate target cell are respectively the second PLMN and the second AMF.

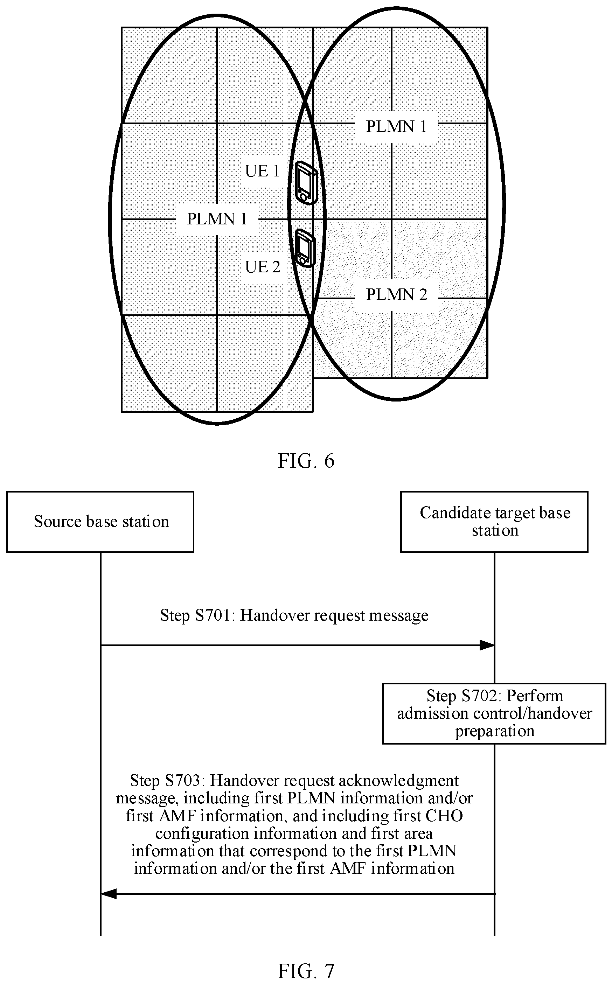

As shown in FIG. 6, assuming that an area of the country A (or the operator A) and covered by the candidate target cell is denoted as the first area, and an area of the country B (or the operator B) and covered by the candidate target cell is denoted as the second area, it may be considered that the candidate target cell covers the first area and the second area. The first area corresponds to the first PLMN and/or the first AMF, and the second area corresponds to the second PLMN and/or the second AMF.

The first area information indicates a geographical location/range of the first area, and the second area information indicates a geographical location/range of the second area. The area information may be represented by one or more types of geographical location information in longitude information, latitude information, and height information, may be represented by one or more of longitude information, latitude information, and height information in combination with another parameter (for example, diameter/radius information), or may be represented by an area identifier (for example, an ID or an index). There is a mapping relationship between an area identifier and a specific geographical location/range (for example, a location/range represented by the longitude information, the latitude information, and the height information) of an area indicated by the area identifier, and the mapping relationship may be agreed on in a protocol, or may be sent by a network device to the terminal device by using system information, an RRC message, or a layer 2 message. This is not limited in this application. Certainly, the area information may alternatively be represented in another form, for example, represented by a name or an identifier of an administrative region. This is not limited in this application.

Further, the candidate target network device may respectively configure CHO configuration information for different PLMNs and/or AMFs in the candidate target cell. Specifically, the first CHO configuration information may correspond to the first PLMN and/or the first AMF, and the second CHO configuration information may correspond to the second PLMN and/or the second AMF.

The first CHO configuration information may include first CHO execution condition information, and the first CHO execution condition information indicates a CHO execution condition (which may be referred to as a first CHO execution condition) that is of the candidate target cell and that corresponds to the first PLMN and/or the first AMF. The first CHO execution condition may be one or more of a signal quality-based CHO execution condition, a time/timer-based CHO execution condition, or a location-based CHO execution condition. Correspondingly, the first CHO execution condition information may include one or more of signal quality-based execution condition information, time/timer-based execution condition information, or location-based execution condition information. For a specific implementation of the first CHO execution condition information, refer to the foregoing related descriptions of the CHO execution condition information. Details are not described herein again.

Similarly, the second CHO configuration information may include second CHO execution condition information, and the second CHO execution condition information indicates a CHO execution condition (which may be referred to as a second CHO execution condition) that is of the candidate target cell and that corresponds to the second PLMN and/or the second AMF. The second CHO execution condition may be one or more of a signal quality-based CHO execution condition, a time/timer-based CHO execution condition, or a location-based CHO execution condition. Correspondingly, the second CHO execution condition information may include one or more of signal quality-based execution condition information, time/timer-based execution condition information, or location-based execution condition information.

It should be noted that, in this embodiment of this application, content included in the first CHO configuration information and content included in the second CHO configuration information may be completely the same, partially the same, or completely different. For example, RACH resource information included in the first CHO configuration information may be the same as or different from RACH resource information included in the second CHO configuration information. The RACH resource information may include a preamble (for example, a preamble index), a time-frequency resource, and the like. Therefore, that the two pieces of RACH resource information are different may mean that the preambles are different and/or the time-frequency resources are different. For another example, the first CHO execution condition information included in the first CHO configuration information may be the same as or different from the second CHO execution condition information included in the second CHO configuration information. For still another example, key information/a key parameter that is included in the first CHO configuration information and that is used by the terminal device to access the candidate target cell may be the same as or different from key information/a key parameter that is included in the second CHO configuration information and that is used by the terminal device to access the candidate target cell. In this embodiment of this application, the source network device may perform CHO preparation processes with the candidate target network device respectively for the first PLMN and/or the first AMF of the candidate target cell and the second PLMN and/or the second AMF of the candidate target cell, and separately send, to the terminal device, content related to the first PLMN information and/or the first AMF information and content related to the second PLMN information and/or the second AMF information that are of the candidate target cell.

The following describes in detail a CHO preparation process performed between the network device (for example, the source network device or the candidate target network device) and the first PLMN and/or the first AMF.

In a possible implementation, if there are directly connected communication interfaces (for example, Xn interfaces) between the source network device and the candidate target network device, the source network device may exchange information with the candidate target network device, perform CHO preparation, and obtain corresponding CHO configuration information, through the directly connected communication interfaces. In this case, a handover process may be referred to as an Xn interface-based CHO process. For example, as shown in FIG. 7, in step S701, a source base station may directly send a handover request message to a candidate target base station. In step S702, after receiving the handover request message, the candidate target base station may perform admission control/handover preparation based on the handover request message. If the candidate target base station determines to accept the handover request message, the candidate target base station may perform processing such as resource configuration and CHO configuration information configuration. Further, in step S703, the candidate target base station may send a handover request acknowledgment message to the source base station, where the handover request acknowledgment message includes first PLMN information and/or first AMF information, and includes first CHO configuration information and first area information that correspond to the first PLMN information and/or the first AMF information, and the first area information indicates a first area covered by a candidate target cell.

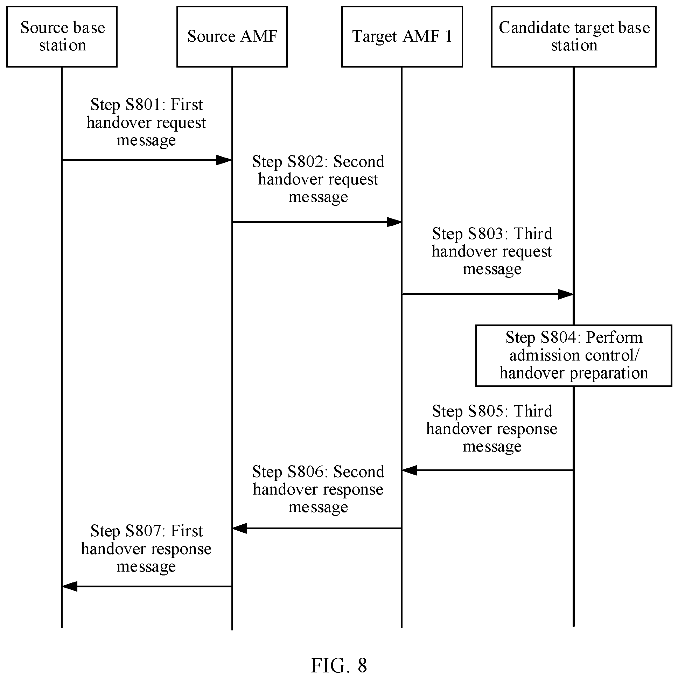

In another possible implementation, if there is no directly connected communication interface between the source network device and the candidate target network device, the source network device may indirectly exchange information with the candidate target network device through communication interfaces between a radio access network device and a core network device, in other words, perform CHO preparation through intermediate forwarding by the core network device. The core network device may be, for example, an AMF, and the communication interface between the radio access network device and the core network device may be, for example, an NG interface. In this case, a handover process may be referred to as an NG interface-based CHO process. For example, as shown in FIG. 8, when a source base station and a candidate target base station belong to different AMFs or are managed by different AMFs, in step S801, the source base station may send a first handover request message to a source AMF. The source AMF is an AMF that manages the source base station. The first handover request message may be a HO required message or have another name. This is not limited. In step S802, after receiving the first handover request message, the source AMF may send a second handover request message to a target AMF 1. The target AMF 1 is an AMF that manages the candidate target base station, and may be the foregoing first AMF or an AMF corresponding to the first PLMN. The second handover request message may be an Namf_Communication_CreatUEContext Request message or have another name. This is not limited. In step S803, after receiving the second handover request message, the target AMF 1 may send a third handover request message to the candidate target base station. The third handover request message may be an HO request message or have another name. This is not limited. In step S804, after receiving the third handover request message, the candidate target base station may perform admission control/handover preparation for handover of UE based on the third handover request message. If the candidate target base station determines to accept the handover request, the candidate target base station may perform processing such as resource configuration and CHO configuration information configuration. Further, in step S805, the candidate target base station may send a third handover response message to the target AMF 1. The third handover response message may be an HO request ACK message or have another name. This is not limited. In step S806, after receiving the third handover response message, the target AMF 1 may send a second handover response message to the source AMF. The second handover response message may be an Namf_Communication_CreatUEContext Response message or have another name. This is not limited. In step S807, after receiving the second handover response message, the source AMF may send a first handover response message to the source base station. The first handover response message may be a HO command message or have another name. This is not limited. The third handover response message, the second handover response message, and the first handover response message may include first PLMN information and/or first AMF information, and include first CHO configuration information and first area information that correspond to the first PLMN and/or the first AMF, and the first area information indicates a first area covered by a candidate target cell. It should be noted that the source AMF and the target AMF 1 may be the same, or may be different. This is not limited.

Further, the source network device may send a first RRC message to the terminal device after obtaining, from the candidate target network device, the first PLMN information and/or the first AMF information of the candidate target cell and the first CHO configuration information and the first area information that correspond to the first PLMN and/or the first AMF, where the first RRC message includes the first PLMN information and/or the first AMF information of the candidate target cell, and includes the first CHO configuration information and the first area information that correspond to the first PLMN and/or the first AMF.

For a CHO preparation process performed between the network device (for example, the source network device or the candidate target network device) and the second PLMN and/or the second AMF, refer to the foregoing implementation of the CHO preparation process performed between the network device (for example, the source network device or the candidate target network device) and the first PLMN and/or the first AMF. Details are not described herein again.

Similarly, the source network device may send a second RRC message to the terminal device after obtaining, from the candidate target network device, the second PLMN information and/or the second AMF information of the candidate target cell and the second CHO configuration information and the second area information that correspond to the second PLMN and/or the second AMF, where the second RRC message includes the second PLMN information and/or the second AMF information of the candidate target cell, and includes the second CHO configuration information and the second area information that correspond to the second PLMN and/or the second AMF.

The second RRC message and the foregoing first RRC message may be a same RRC message, or may be different RRC messages. This is not limited in this application. To be specific, when the candidate target cell is an NTN cell that supports a plurality of PLMNs and/or a plurality of AMFs, the source network device may send, to the terminal device by using one or more RRC messages, CHO configuration information, area information, and the like of the candidate target cell that correspond to each of the plurality of PLMNs and/or AMFs.

It can be learned from the foregoing CHO preparation process that, although a case in which the candidate target network device sends the first information of the candidate target cell to the source network device and the source network device sends the first information of the candidate target cell to the terminal device is described in step S501 and step S502 in this embodiment of this application, this embodiment of this application is not limited to a case in which all the content included in the first information is sent as a whole by using one RRC message, and different PLMN information and/or AMF information, and the CHO configuration information and the area information that correspond to the PLMN information and/or the AMF information in the first information may be separately sent by using different RRC messages, to better conform to a concept that the candidate target network device separately manages and configures different PLMNs and/or AMFs supported by the candidate target network device.

It should be noted that the source network device may configure one or more candidate target cells for the terminal device. In this embodiment of this application, one candidate target cell configured by the source network device for the terminal device is used as an example to describe a specific CHO mechanism applied when the candidate target cell is the NTN cell that supports the plurality of PLMNs and/or the plurality of AMFs. Another candidate target cell configured by the source network device for the terminal device may also be or may not be an NTN cell that covers geographical areas of a plurality of countries or service areas of a plurality of operators (namely, an NTN cell that supports a plurality of PLMNs and/or AMFs). This is not limited. In addition, the another candidate target cell configured by the source network device for the terminal device and the candidate target cell described as an example in this embodiment of this application may belong to a same network device, or may belong to different network devices. This is not limited in this application.

Optionally, if the source network device configures a plurality of candidate target cells for the terminal device, the source network device may further obtain CHO configuration information of another candidate target cell from another candidate target network device, and send the CHO configuration information of the another candidate target cell to the terminal device by using a third RRC message. In other words, the source network device may send the third RRC message to the terminal device, where the third RRC message includes the CHO configuration information corresponding to the another candidate target cell. It may be understood that, as described above, the another candidate target cell may also be or may not be a candidate cell that supports a plurality of PLMNs and/or AMFs. This is not limited. Therefore, when the candidate target cell is also the candidate cell that supports the plurality of PLMNs and/or AMFs, the third RRC message may further include PLMN information and/or AMF information, and area information that correspond to the CHO configuration information of the another candidate target cell. Similarly, the third RRC message and the first RRC message may be a same RRC message, or may be different RRC messages. This is not limited. The third RRC message and the second RRC message may be a same RRC message, or may be different RRC messages. This is not limited either.

Step S503: The terminal device determines a target cell, and target PLMN information and/or target AMF information based on the first information and an area in which the terminal device is currently located.

Specifically, if the first CHO execution condition in the first CHO configuration information is met, and the terminal device is currently located in the first area, the terminal device may determine the candidate target cell as the target cell, and determine the first PLMN information as the target PLMN information and/or determine the first AMF information as the target AMF information.

Optionally, if the first CHO execution condition in the first CHO configuration information and the second CHO execution condition in the second CHO configuration information are both met, and the terminal device is currently located in the first area, the terminal device may determine the candidate target cell as the target cell, and determine the first PLMN information as the target PLMN information and/or determine the first AMF information as the target AMF information.

The target PLMN information indicates a target PLMN, and the target AMF information indicates a target AMF. In other words, the target PLMN information corresponds to a target PLMN, and the target AMF information corresponds to a target AMF.

Optionally, the terminal device may further determine the first area as a target area, and the target PLMN information and/or the target AMF information are/is PLMN information and/or AMF information that correspond/corresponds to the target area.

In this embodiment of this application, after receiving the first CHO configuration information and the second CHO configuration information of the candidate target cell, the terminal device may determine whether the first CHO execution condition in the first CHO configuration information and the second CHO execution condition in the second CHO configuration information are met, and determine the target cell, and the target PLMN and/or the target AMF with reference to a location of the terminal device (for example, the area in which the terminal device is currently located), a PLMN and/or an AMF that are/is supported by the terminal device, and the like.

It should be noted that the first area may also be understood as an area, in one or more areas in the candidate target cell that meet the CHO execution condition, that overlaps an area to which the location of the terminal device belongs. Further, if the terminal device located in the first area can determine the cell that meets the CHO execution condition as the target cell, the terminal device is required to support the first PLMN and/or the first AMF that correspond/corresponds to the first area. The terminal device may also support the second AMF and/or the second PLMN. This is not limited. If the terminal device does not support the first AMF and/or the first PLMN, the cell cannot be determined as the target cell even if the cell meets the corresponding CHO execution condition.

In view of this, in a possible implementation, if the first CHO execution condition in the first CHO configuration information is met, the terminal device is currently located in the first area, and the terminal device supports the first PLMN and/or the first AMF that correspond/corresponds to the first area, the terminal device may determine the candidate target cell as the target cell, and determine the first PLMN as the target PLMN and/or determine the first AMF as the target AMF.

In another possible implementation, if the first CHO execution condition in the first CHO configuration information and the second CHO execution condition in the second CHO configuration information are both met, the terminal device is currently located in the first area, and the terminal device supports the first PLMN and/or the first AMF that correspond/corresponds to the first area, the terminal device may determine the candidate target cell as the target cell, and determine the first PLMN as the target PLMN and/or determine the first AMF as the target AMF.

It should be understood that the first area is merely an example. If the second CHO execution condition in the second CHO configuration information is met, the terminal device is currently located in the second area, and the terminal device supports the second PLMN and/or the second AMF that correspond/corresponds to the second area, the terminal device may determine the candidate target cell as the target cell, and determine the second PLMN as the target PLMN and/or determine the second AMF as the target AMF. Optionally, the second area may be determined as the target area. In this case, for related processing for the second area, refer to the foregoing related descriptions of the first area. Details are not described again.

For example, the terminal device may determine, as the target cell based on the current location of the terminal device, a candidate target cell managed by a PLMN and/or an AMF that supports/allows access of the terminal device at the location (or in an area to which the location belongs).

For example, with reference to FIG. 6, it is assumed that UE 1 supports a PLMN 1 and a PLMN 2. If the UE 1 determines, after performing determining on a CHO execution condition, that a cell 1 corresponding to first CHO configuration information meets the CHO execution condition, and a cell 1 corresponding to second CHO configuration information also meets CHO execution condition, the UE 1 may determine, based on a geographical location of the UE 1, that the UE 1 is located in a first area, where the first area corresponds to the PLMN 1 and the first CHO configuration information. Because a PLMN and/or an AMF supporting/allowing access of the UE 1 in the first area are/is the PLMN 1 and/or an AMF 1, the UE 1 may determine the cell 1 corresponding to the first CHO configuration information as a target cell, determine the PLMN 1 as a target PLMN, and determine the AMF 1 as a target AMF. Optionally, the UE 1 may further determine the first area as a target area.

For another example, it is assumed that UE 2 supports a PLMN 1 and a PLMN 2. If the UE 2 determines, after performing determining on a CHO execution condition, that a cell 1 corresponding to second CHO configuration information meets CHO execution condition , the UE 2 may determine, based on a geographical location of the UE 2, that the UE 2 is located in a second area. Because a PLMN and/or an AMF supporting/allowing access of the UE 2 in the second area are/is the PLMN 2 and/or an AMF 2, the UE 2 may determine the cell 1 corresponding to the second CHO configuration information as a target cell, determine the PLMN 2 as a target PLMN, and determine the AMF 2 as a target AMF.

For still another example, it is assumed that UE 2 supports a PLMN 1 and a PLMN 2. If the UE 2 determines, after performing determining on a CHO execution condition, that a cell 1 corresponding to first CHO configuration information meets CHO execution condition , and a cell 1 corresponding to second CHO configuration information also meets the CHO execution condition information, the UE 2 may determine, based on a geographical location of the UE 2, that the UE 2 is located in a second area. Because a PLMN and/or an AMF supporting/allowing access of the UE 2 in the second area are/is the PLMN 2 and/or an AMF 2, the UE 2 may determine the cell 1 corresponding to the second CHO configuration information as a target cell, determine the PLMN 2 as a target PLMN, and determine the AMF 2 as a target AMF. Optionally, the UE 2 may further determine the second area as a target area.

Step S504: The terminal device sends a first message to a target network device, where the first message indicates that the terminal device has been successfully handed over to the target cell, and includes the target PLMN information and/or the target AMF information.

Correspondingly, the target network device may receive the first message from the terminal device.

It may be understood that, in this embodiment of this application, the network device that manages the candidate target cell is referred to as the candidate target network device, in other words, a network device to which the candidate target cell belongs is the candidate target network device. The candidate target network device may be referred to as the target network device after the terminal device determines the candidate target cell as the target cell. In other words, the target network device is a network device to which the candidate target cell determined as the target cell belongs.

The target cell supports the first PLMN and/or the first AMF, and supports the second PLMN and/or the second AMF. In other words, the target cell accesses the first PLMN and/or the first AMF, and accesses the second PLMN and/or the second AMF; the target cell belongs to the first PLMN, core network devices connected to the target cell include the first AMF, the target cell also belongs to the second PLMN, and the core network devices connected to the target cell include the second AMF; or the target cell is managed by the first PLMN and/or the first AMF, and is managed by the second PLMN and/or the second AMF. Correspondingly, the target PLMN information and/or the target AMF information may be the first PLMN information and/or the first AMF information, or may be the second PLMN information and/or the second AMF information.

Optionally, the first message may further include one or more of the following information: identification information (for example, a PCI and/or a C-RNTI, or a CGI) of the target cell, index information corresponding to the target cell (for example, a measurement identifier (measID) corresponding to the target cell and/or a CHO configuration identifier (CondReconfigId) corresponding to the target cell), information other than the index information and the identification information that correspond to the target cell in CHO configuration information corresponding to the target PLMN or the target AMF, and area information corresponding to the target PLMN or the target AMF.

For example, a first cell is the candidate target cell, and may be one of the plurality of candidate target cells configured by the source network device for the terminal device. In this case, if the terminal device determines the first cell as the target cell, and determines the first PLMN to which the first cell belongs as the target PLMN and/or determines the first AMF that manages the first cell as the target AMF, the terminal device may send the first message to a network device (namely, the target network device) to which the first cell belongs. The first message includes at least one of the following: the first PLMN information, the first AMF information, identification information of the first cell (for example, a PCI and/or a C-RNTI of the first cell, or a CGI of the first cell), and one or more pieces of information in first CHO configuration information of the first cell. The first CHO configuration information includes index information (for example, a measurement identifier measID and/or a CHO configuration identifier CondReconfigId) corresponding to the first cell and area information corresponding to the first PLMN information or the first AMF information.

It may be understood that the network device to which the first cell belongs may be referred to as the candidate target network device before the first cell is determined as the target cell, and may be referred to as the target network device after the first cell is determined as the target cell.

Optionally, the first message may be a handover acknowledge (for example, HO confirm) message, or may have another name. This is not limited in this application.

As described above, the key information/key parameter that is included in the first CHO configuration information and that is for accessing the candidate target cell may be the same as or different from the key information/key parameter that is included in the second CHO configuration information and that is for accessing the candidate target cell, and the RACH resource information included in the first CHO configuration information may be the same as or different from the RACH resource information included in the second CHO configuration information.

If the key information/key parameter that is included in the first CHO configuration information and that is for accessing the candidate target cell is different from the key information/key parameter that is included in the second CHO configuration information and that is for accessing the candidate target cell (namely, the target cell), when the RACH resource information included in the first CHO configuration information is different from the RACH resource information included in the second CHO configuration information, for example, the preambles and/or the time-frequency resources may be different, if the terminal device determines the candidate target cell as the target cell, determines the first PLMN as the target PLMN, and determines the first AMF as the target AMF, the terminal device may encrypt the first message by using a first key corresponding to the first CHO configuration information when sending the first message to the network device (namely, the target network device) to which the candidate target cell belongs. In this way, security of transmitting the first message can be effectively improved. Optionally, the first CHO configuration information may include first key information, and the terminal device may determine the first key based on the first key information.

Correspondingly, because different CHO configuration information corresponds to different RACH resource information, in other words, different PLMN information and/or AMF information correspond/corresponds to different RACH resource information, after receiving the first message, the target network device may determine, based on a RACH resource used by the terminal device to initiate random access, that the first CHO configuration information is selected by the terminal device, in other words, determine that the target PLMN selected by the terminal device is the first PLMN or the target AMF selected by the terminal device is the first AMF, and then decrypt the first message by using the corresponding first key, where the first key may be a key indicated by the first key information in the first CHO configuration information.

When the RACH resource information included in the first CHO configuration information is the same as the RACH resource information included in the second CHO configuration information, the target network device cannot determine, based on a RACH resource used by the terminal device to initiate random access, a key used by the terminal device. Therefore, in this scenario, to enable the target network device to correctly receive/parse the first message, the terminal device may send two first messages to the target network device, where one of the first messages is encrypted by using a first key corresponding to the first CHO configuration information, and the other first message is encrypted by using a second key corresponding to the second CHO configuration information. This can effectively improve security of transmitting the first message. Optionally, the first CHO configuration information may include first key information, the second CHO configuration information may include second key information, and the terminal device may determine the first key based on the first key information, and determine the second key based on the second key information. Correspondingly, after receiving the two first messages, the target network device may decrypt the two first messages by using the first key and/or the second key. It can be learned that in this case, the target network device can decrypt the first message regardless of whether the terminal device encrypts the first message by using the first key or the second key, to obtain the information in the first message.

Optionally, in a possible implementation, when different CHO configuration information includes same RACH resource information, the terminal device may also encrypt the first message by using a key corresponding to the first CHO configuration information or a key corresponding to the second CHO configuration information. Although the different CHO configuration information includes the same RACH resource information, and the target network device cannot determine, based on the RACH resource information used by the terminal device to perform random access, the key for encrypting the first message, because the terminal device encrypts the first message by using the key corresponding to the first CHO configuration information or the second CHO configuration information, the target network device may attempt to decrypt the first message by using the keys corresponding to the different CHO configuration information (namely, the key corresponding to the first CHO configuration information and the key corresponding to the second CHO configuration information), to successfully decrypt the first message.

Optionally, the target network device may send a second message to the target AMF after receiving the first message from the terminal device, where the second message notifies the target AMF that the terminal device has completed the handover. The second message may be a handover notify (HO notify) message, or may have another name. This is not limited in this application. For example, because it is assumed above that the terminal device is located in the first area, the CHO execution condition corresponding to the first PLMN and/or the first AMF is met, the first PLMN and/or the first AMF correspond/corresponds to the first area, and the terminal device supports the first PLMN and/or the first AMF, the target AMF herein may be the first AMF.

Optionally, the target cell or the target network device may be managed by a plurality of AMFs (for example, the first AMF and the second AMF described above). Therefore, after receiving the first message from the terminal device, the target network device may determine, based on the first message, the target AMF selected by the terminal device. If the target network device determines that the target AMF is the first AMF, the target network device may send a third message to the second AMF, where the third message indicates the second AMF to release a connection established by the second AMF for the terminal device, and the connection is a connection between the second AMF and the target network device that is established by the second AMF for the terminal device. The third message may include a connection release cause value. For example, the connection release cause value indicates that a connection release cause is a location exception or AMF unavailability. Herein, the second AMF is an AMF that is configured to manage the target network device but that does not allow access of the terminal device, in other words, is a non-target AMF.

Optionally, after determining the first PLMN as the target PLMN and determining the first AMF as the target AMF, the terminal device may further release the second PLMN information and/or the second AMF information, and release the second CHO configuration information and the second area information. Alternatively, the target network device may further send a fourth message to the terminal device, where the fourth message indicates the terminal device to release the second PLMN information and/or the second AMF information and release the second CHO configuration information and the second area information that correspond to the second PLMN information and/or the second AMF information. Correspondingly, after receiving the fourth message, the terminal device may release the second PLMN information and/or the second AMF information, and release the second CHO configuration information and the second area information. According to this solution, the terminal device can delete or release unnecessary configuration information, resources, or the like in time, to effectively improve resource utilization.

It should be understood that, in this embodiment of this application, the first AMF and the second AMF are used as an example for description. When the target cell or the target network device is managed by more AMFs, the target network device may send a third message to each AMF other than the target AMF, to indicate these AMFs to release connections established for the terminal device.

It can be learned from this that the foregoing technical solution provides a CHO mechanism applied when a cell that covers geographical areas of a plurality of countries or service areas of a plurality of operators is configured as the candidate target cell of the terminal device. The terminal device can determine the target cell, and the target PLMN and/or the target AMF from the configured candidate target cell based on cells that meet the CHO execution condition, the location of the terminal device, and the PLMN and/or the AMF that are/is supported by the terminal device. Therefore, the foregoing technical solution can effectively improve handover reliability.

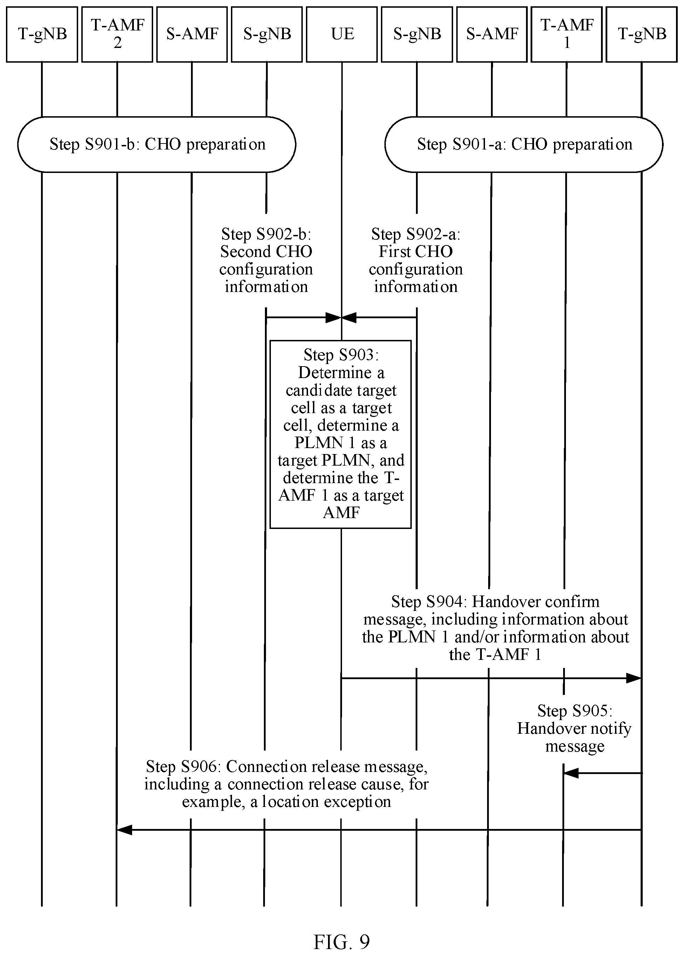

FIG. 9 shows a specific example of the communication method according to an embodiment of this application. In this example, an S-gNB represents a source base station, an S-AMF represents a source AMF, a T-gNB represents a target base station, and may also be referred to as a candidate T-gNB, a T-AMF 1 represents a target AMF 1, and a T-AMF2 represents a target AMF 2. The S-gNB may configure, as a candidate target cell of UE, a cell served by the T-gNB. For the candidate target cell, the T-AMF 1 is an AMF that manages a virtual cell, in the candidate target cell, that corresponds to a PLMN 1, and the T-AMF 2 is an AMF that manages a virtual cell, in the candidate target cell, that corresponds to a PLMN 2, in other words, the candidate target cell is a cell that supports the PLMN 1 and the PLMN 2, or is a cell that supports the T-AMF 1 and the T-AMF 2. In other words, a core network device that may be connected to the candidate target cell is the T-AMF 1 and/or the T-AMF 2, and the candidate target cell belongs to the PLMN 1 and/or the PLMN 2. Alternatively, the candidate target cell is managed by the T-AMF 1/T-AMF 2/PLMN 1/PLMN 2. As shown in FIG. 9, in step S901-a, the S-gNB performs CHO preparation with the T-gNB through the S-AMF and the T-AMF 1. Similarly, in step S901-b, the S-gNB performs CHO preparation with the T-gNB through the S-AMF and the T-AMF 2. In step S902-a, the S-gNB may send first CHO configuration information to the UE, where the first CHO configuration information includes first CHO execution condition information. Similarly, in step S902-b, the S-gNB may send second CHO configuration information to the UE, where the second CHO configuration information includes second CHO execution condition information. The first CHO configuration information and the second CHO configuration information may be sent by using a same RRC message or different RRC messages. This is not limited. In step S903, the UE may determine, based on the first CHO configuration information and the second CHO configuration information, whether CHO execution conditions are met. If the UE is located in an area corresponding to the PLMN 1, the UE supports the PLMN 1, and a first CHO execution condition is satisfied, the UE may determine the candidate target cell as a target cell, determine the PLMN 1 as a target PLMN, and determine the T-AMF 1 as a target AMF. Further, in step S904, the UE may send a handover acknowledge message to the T-gNB, where the handover acknowledge message notifies the T-gNB that the UE has been successfully handed over to the target cell, and the handover acknowledge message includes target PLMN information and/or target AMF information (namely, information about the PLMN 1 and/or information about the T-AMF 1). Then, in step S905, the T-gNB may send a handover notify message to the T-AMF 1, where the handover notify message notifies the T-AMF 1 that the UE has completed the handover. In step S906, the T-gNB may send a connection release message to the T-AMF 2 (namely, a non-target AMF), where the connection release message indicates the T-AMF 2 to release a connection between the T-AMF 2 and the T-gNB that is established for the UE, and includes a connection release cause, for example, a location exception, unavailability of the T-AMF 2, or mismatching between the T-AMF 2 and a location of the UE.

It should be noted that in FIG. 9, the T-AMF 1 and the S-AMF may be the same or different, and the T-AMF 2 and the S-AMF may be the same or different. This is not limited. It should be noted that the T-AMF 1 is different from the T-AMF 2. The S-gNB and the T-gNB may be a same base station, or may be different base stations. This is not limited in this embodiment of this application.

Optionally, the target network device in this embodiment of this application may be in a separated form including a CU node and a DU node. Specifically, if the target network device is in the separated form including the CU node and the DU node, the CU node serving as a message/information receiver may send a part or all of received information to the DU node. For example, a target CU node may send a part or all of the information in the received first message to a target DU node. The target CU node is the CU node of the target network device, and the target DU node is the DU node of the target network device. For the information included in the first message, refer to the foregoing descriptions. Repeated descriptions omitted herein.

Further, if the CU node may be divided into a control plane (CU-CP) and a user plane (CU-UP), a CU-CP node serving as the message/information receiver may send a part or all of the received information to a CU-UP node. For example, a target CU-CP node may send a part or all of the information included the received first message to a target CU-UP node.

Optionally, the terminal device in this embodiment of this application may be in a separated form including a CU node and a DU node. Further, the CU node in the terminal device may also be divided into a control plane (CU-CP) and a user plane (CU-UP). Specifically, if the terminal device is in the separated form including the CU node and the DU node, or further, the CU node in the terminal device includes the control plane (CU-CP) and the user plane (CU-UP), the CU node (or a CU-CP node) serving as a message/information receiver may send a part or all of received information to the DU node (or a CU-UP node). For a specific implementation, refer to the foregoing descriptions. Details are not described again.

It can be learned from this that the foregoing technical solution provides an information exchange method in a CU-DU scenario, so that a sending node and a receiving node can appropriately exchange information in time, to ensure normal execution of a CHO procedure and improve system reliability.

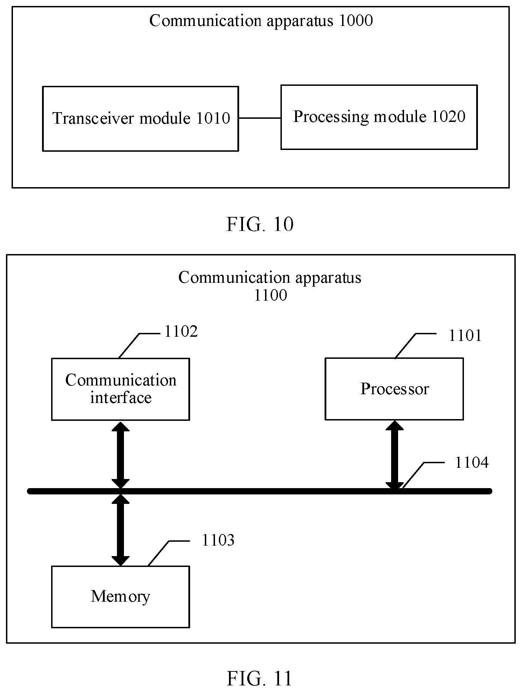

An embodiment of this application further provides a communication apparatus. FIG. 10 is a schematic diagram of a structure of the communication apparatus according to this embodiment of this application. The communication apparatus 1000 includes a transceiver module 1010 and a processing module 1020.

In an embodiment, the communication apparatus may be configured to implement a function of the terminal device in any one of the foregoing method embodiments. For example, the communication apparatus may be a terminal device, for example, a handheld terminal device or a vehicle-mounted terminal device. Alternatively, the communication apparatus may be a chip or a circuit included in a terminal device or an apparatus, for example, various types of vehicles, including a terminal device.

For example, when the communication apparatus performs operations or steps corresponding to the terminal device in the method embodiment shown in FIG. 5, the transceiver module 1010 is configured to receive first information of a candidate target cell from a source network device, where the first information includes first PLMN information and/or first AMF information, and includes second PLMN information and/or second AMF information; the first information further includes first CHO configuration information and first area information that correspond to the first PLMN information and/or the first AMF information, and includes second CHO configuration information and second area information that correspond to the second PLMN information and/or the second AMF information; and the first area information indicates a first area covered by the candidate target cell, and the second area information indicates a second area covered by the candidate target cell. The processing module 1020 is configured to determine a target cell, and target PLMN information and/or target AMF information based on the first information and an area in which the communication apparatus is currently located.

In a possible design, the processing module 1020 is specifically configured to: if a first CHO execution condition in the first CHO configuration information is met, and the terminal device is currently located in the first area, determine the candidate target cell as the target cell, and determine the first PLMN information as the target PLMN information and/or determine the first AMF information as the target AMF information.

In a possible design, the processing module 1020 is specifically configured to: if the first CHO execution condition in the first CHO configuration information and a second CHO execution condition in the second CHO configuration information are both met, and the terminal device is currently located in the first area, determine the candidate target cell as the target cell, and determine the first PLMN information as the target PLMN information and/or determine the first AMF information as the target AMF information.

In a possible design, the transceiver module 1010 is further configured to send a first message to a target network device, where the first message indicates that the terminal device has been successfully handed over to the target cell, and includes the target PLMN information and/or the target AMF information, and the target network device is a network device that manages the target cell.

In a possible design, the first message further includes identification information of the target cell and/or index information corresponding to the target cell.

In a possible design, when RACH resource information included in the first CHO configuration information is different from RACH resource information included in the second CHO configuration information, the first message may be encrypted by using a first key corresponding to the first CHO configuration information.

In a possible design, when RACH resource information included in the first CHO configuration information is the same as RACH resource information included in the second CHO configuration information, the transceiver module 1010 is specifically configured to send two first messages to the target network device, where one of the first messages is encrypted by using a first key corresponding to the first CHO configuration information, and the other first message is encrypted by using a second key corresponding to the second CHO configuration information.

In a possible design, the first CHO configuration information includes first CHO execution condition information, and the first CHO execution condition information indicates a first CHO execution condition that is of the candidate target cell and that corresponds to the first PLMN information and/or the first AMF information, and includes one or more of signal quality-based execution condition information, time/timer-based execution condition information, or location-based execution condition information; the first PLMN information includes an identifier of a first PLMN, and the first AMF information includes an identifier of a first AMF, or includes an identifier of a first AMF and the identifier of the first PLMN; the second CHO configuration information includes second CHO execution condition information, and the second CHO execution condition information indicates a second CHO execution condition that is of the candidate target cell and that corresponds to the second PLMN information and/or the second AMF information, and includes one or more of signal quality-based execution condition information, time/timer-based execution condition information, or location-based execution condition information; and the second PLMN information includes an identifier of a second PLMN, and the second AMF information includes an identifier of a second AMF, or includes an identifier of a second AMF and the identifier of the second PLMN.

In a possible design, the processing module 1020 is further configured to: release the second PLMN information and/or the second AMF information, and release the second CHO configuration information and the second area information. In another embodiment, the communication apparatus may be configured to implement a function of the network device (for example, the source network device or the target network device (also referred to as the candidate target network device)) in any one of the foregoing method embodiments. For example, the communication apparatus may be a network device or a chip or a circuit included in the network device.

For example, when the communication apparatus performs operations or steps corresponding to the source network device in the method embodiment shown in FIG. 5, the transceiver module 1010 is configured to receive first information of a candidate target cell from a candidate target network device, where the first information includes first PLMN information and/or first AMF information, and includes second PLMN information and/or second AMF information; the first information further includes first CHO configuration information and first area information that correspond to the first PLMN information and/or the first AMF information, and includes second CHO configuration information and second area information that correspond to the second PLMN information and/or the second AMF information; and the first area information indicates a first area covered by the candidate target cell, and the second area information indicates a second area covered by the candidate target cell. The processing module 1020 is configured to send the first information of the candidate target cell to a terminal device through the transceiver module 1010.

In a possible design, the first CHO configuration information includes first CHO execution condition information, and the first CHO execution condition information indicates a first CHO execution condition that is of the candidate target cell and that corresponds to the first PLMN information and/or the first AMF information, and includes one or more of signal quality-based execution condition information, time/timer-based execution condition information, or location-based execution condition information; the first PLMN information includes an identifier of a first PLMN, and the first AMF information includes an identifier of a first AMF, or includes an identifier of a first AMF and the identifier of the first PLMN; the second CHO configuration information includes second CHO execution condition information, and the second CHO execution condition information indicates a second CHO execution condition that is of the candidate target cell and that corresponds to the second PLMN information and/or the second AMF information, and includes one or more of signal quality-based execution condition information, time/timer-based execution condition information, or location-based execution condition information; and the second PLMN information includes an identifier of a second PLMN, and the second AMF information includes an identifier of a second AMF, or includes an identifier of a second AMF and the identifier of the second PLMN.

When the communication apparatus performs operations or steps corresponding to the target network device in the method embodiment shown in FIG. 5, the transceiver module 1010 is configured to send first information of a candidate target cell to a source network device, where the first information includes first PLMN information and/or first AMF information, and includes second PLMN information and/or second AMF information; the first information further includes first CHO configuration information and first area information that correspond to the first PLMN information and/or the first AMF information, and includes second CHO configuration information and second area information that correspond to the second PLMN information and/or the second AMF information; and the first area information indicates a first area covered by the candidate target cell, and the second area information indicates a second area covered by the candidate target cell. The processing module 1020 is configured to receive a first message from a terminal device through the transceiver module 1010 if the terminal device determines the candidate target cell as a target cell, where the first message indicates that the terminal device has been successfully handed over to the target cell, and includes target PLMN information and/or target AMF information, and the target PLMN information and/or the target AMF information are/is the first PLMN information and/or the first AMF information, or are/is the second PLMN information and/or the second AMF information.

In a possible design, when RACH resource information included in the first CHO configuration information is different from RACH resource information included in the second CHO configuration information, the processing module 1020 is specifically configured to: determine, based on RACH resource information used by the terminal device to initiate a random access procedure, a first key for decrypting the first message, and decrypt the first message by using the first key.

In a possible design, when RACH resource information included in the first CHO configuration information is the same as RACH resource information included in the second CHO configuration information, the transceiver module 1010 is specifically configured to receive two first messages from the terminal device. The processing module 1020 is specifically configured to decrypt the two first messages by using a first key and/or a second key, where the first key is a key corresponding to the first CHO configuration information, and the second key is a key corresponding to the second CHO configuration information.

In a possible design, the transceiver module 1010 is further configured to send a second message to a target AMF corresponding to the target AMF information, where the second message indicates, to the target AMF, that the terminal device has completed the handover.

In a possible design, the transceiver module 1010 is further configured to send a third message to an AMF corresponding to AMF information other than the target AMF information in the first AMF information and the second AMF information, where the third message indicates the another AMF to release a connection established for the terminal device.

In a possible design, the third message includes a connection release cause value, and the connection release cause value is a location exception or AMF unavailability.

In a possible design, the first CHO configuration information includes first CHO execution condition information, and the first CHO execution condition information indicates a CHO execution condition that is of the candidate target cell and that corresponds to the first PLMN information and/or the first AMF information, and includes one or more of signal quality-based execution condition information, time/timer-based execution condition information, or location-based execution condition information; the first PLMN information includes an identifier of a first PLMN, and the first AMF information includes an identifier of a first AMF, or includes an identifier of a first AMF and the identifier of the first PLMN; the second CHO configuration information includes second CHO execution condition information, and the second CHO execution condition information indicates a CHO execution condition that is of the target cell and that corresponds to the second PLMN information and/or the second AMF information, and includes one or more of signal quality-based execution condition information, time/timer-based execution condition information, or location-based execution condition information; and the second PLMN information includes an identifier of a second PLMN, and the second AMF information includes an identifier of a second AMF, or includes an identifier of a second AMF and the identifier of the second PLMN.

The processing module 1020 in the communication apparatus may be implemented by at least one processor or processor-related circuit component, and the transceiver module 1010 may be implemented by at least one transceiver, transceiver-related circuit component, or communication interface. Operations and/or functions of the modules in the communication apparatus are respectively for implementing corresponding procedures of the method shown in FIG. 5, FIG. 7, FIG. 8, or FIG. 9. For brevity, details are not described herein again. Optionally, the communication apparatus may further include a storage module. The storage module may be configured to store data and/or instructions. The transceiver module 1010 and/or the processing module 1020 may read the data and/or the instructions in the storage module, to enable the communication apparatus to implement the corresponding method. The storage module may be implemented, for example, by using at least one memory.

The storage module, the processing module, and the transceiver module may exist separately. Alternatively, all or a part of the modules may be integrated. For example, the storage module and the processing module are integrated, or the processing module and the transceiver module are integrated.

FIG. 11 is a schematic diagram of another structure of a communication apparatus according to an embodiment of this application. The communication apparatus may be configured to implement a corresponding function of the terminal device in the foregoing method embodiments, and for example, may be a terminal device or an apparatus that can support the terminal device in implementing the corresponding function in the foregoing method embodiments. Alternatively, the communication apparatus may be configured to implement a corresponding function of the source network device or the target network device in the foregoing method embodiments, and for example, may be a source network device or a target network device, or may be an apparatus that can support the source network device or the target network device in implementing the corresponding function in the foregoing method embodiments.

The communication apparatus 1100 may include a processor 1101, a communication interface 1102, and a memory 1103. The communication interface 1102 is configured to communicate with another device through a transmission medium. The communication interface 1102 may be a transceiver, or may be an interface circuit, for example, a transceiver circuit or a transceiver chip. The memory 1103 is configured to store program instructions and/or data, and the processor 1101 is configured to execute the program instructions stored in the memory 1103, to implement the methods in the foregoing method embodiments. Optionally, the memory 1103 and the processor 1101 are coupled, and the coupling is indirect coupling or a communication connection between apparatuses, units, or modules in an electrical form, a mechanical form, or another form, and is for information exchange between the apparatuses, the units, or the modules.

In an embodiment, the communication interface 1102 may be specifically configured to perform an action of the transceiver module 1010, and the processor 1101 may be specifically configured to perform an action of the processing module 1020. Details are not described herein again in this application.

In this embodiment of this application, a specific connection medium between the communication interface 1102, the processor 1101, and the memory 1103 is not limited. In this embodiment of this application, the memory 1103, the processor 1101, and the communication interface 1102 are connected through a bus 1104 in FIG. 11, and the bus is represented by a thick line in FIG. 11. A manner of connecting other components is merely an example for description, and is not limited thereto. The bus may be classified into an address bus, a data bus, a control bus, and the like. For ease of representation, only one thick line is used to represent the bus in FIG. 11, but this does not mean that there is only one bus or only one type of bus.

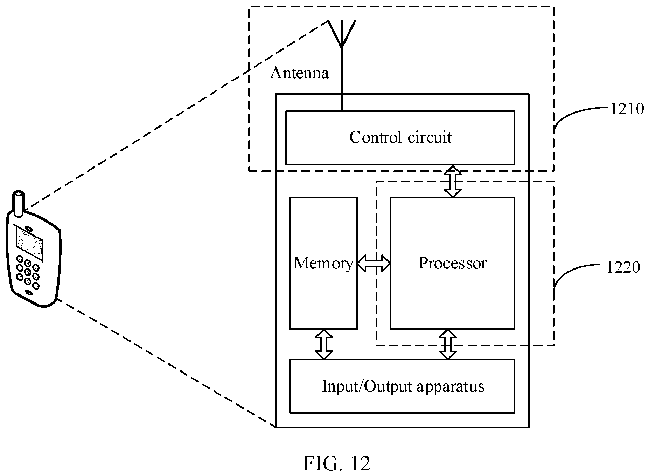

FIG. 12 is a simplified schematic diagram of a structure of a communication apparatus. The communication apparatus may be specifically a terminal device, and is configured to implement a function of the terminal device in any one of the foregoing method embodiments. For ease of understanding and illustration, in FIG. 12, a mobile phone is used as an example of the terminal device. As shown in FIG. 12, the terminal device includes a processor, and may further include a memory. Certainly, the terminal device may further include a radio frequency circuit, an antenna, an input/output apparatus, and the like. The processor is mainly configured to: process a communication protocol and communication data, control the terminal device, execute a software program, process data of the software program, and so on. The memory is mainly configured to store the software program and the data. The radio frequency circuit is mainly configured to: perform conversion between a baseband signal and a radio frequency signal, and process the radio frequency signal. The antenna is mainly configured to send and receive the radio frequency signal in an electromagnetic wave form. The input/output apparatus, for example, a touchscreen, a display, or a keyboard, is mainly configured to: receive data input by a user, and output data to the user. It should be noted that some types of terminal devices may have no input/output apparatus.

When data needs to be sent, after performing baseband processing on the to-be-sent data, the processor outputs a baseband signal to the radio frequency circuit. The radio frequency circuit performs radio frequency processing on the baseband signal and then sends a radio frequency signal to the outside in the electromagnetic wave form through the antenna. When data is sent to the terminal device, the radio frequency circuit receives a radio frequency signal through the antenna, converts the radio frequency signal into a baseband signal, and outputs the baseband signal to the processor. The processor converts the baseband signal into data, and processes the data. For ease of description, FIG. 12 shows only one memory and one processor. In an actual terminal device product, there may be one or more processors and one or more memories. The memory may also be referred to as a storage medium, a storage device, or the like. The memory and the processor may be separately disposed, or may be integrated together. This is not limited in this embodiment of this application.

In this embodiment of this application, the antenna and the radio frequency circuit that have receiving and sending functions may be considered as a transceiver unit of the terminal device, and the processor that has a processing function may be considered as a processing unit of the terminal device. As shown in FIG. 12, the terminal device includes a transceiver unit 1210 and a processing unit 1220. The transceiver unit may also be referred to as a transceiver, a transceiver apparatus, or the like. The processing unit may also be referred to as a processor, a processing board, a processing module, a processing apparatus, or the like. Optionally, a component that is in the transceiver unit 1210 and that is configured to implement the receiving function may be considered as a receiving unit, and a component that is in the transceiver unit 1210 and that is configured to implement the sending function may be considered as a sending unit. In other words, the transceiver unit 1210 includes the receiving unit and the sending unit. The transceiver unit may also be sometimes referred to as a transceiver, a transceiver circuit, or the like. The receiving unit sometimes may also be sometimes referred to as a receiver, a receive circuit, or the like. The sending unit may also be sometimes referred to as a transmitter, a transmit circuit, or the like. It should be understood that the transceiver unit 1210 is configured to perform a sending operation and a receiving operation on a terminal device side in the foregoing method embodiments, and the processing unit 1220 is configured to perform an operation other than the sending operation and the receiving operation of the terminal device in the foregoing method embodiments.

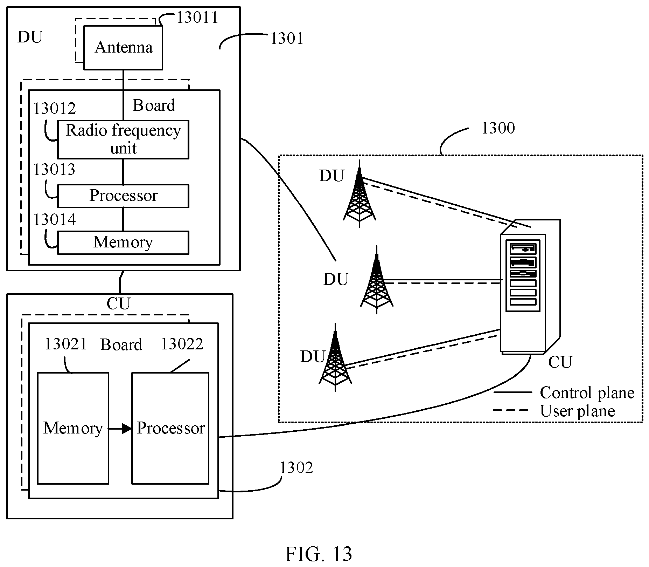

FIG. 13 is another simplified schematic diagram of a structure of a communication apparatus. The communication apparatus may be specifically a network device, for example, a base station, and is configured to implement a function of the network device (for example, the source network device, the target network device, or the candidate target network device) in any one of the foregoing method embodiments.

The network device 1300 includes one or more DUs 1301 and one or more CUs 1302. The DU 1301 may include at least one antenna 13011, at least one radio frequency unit 13012, at least one processor 13013, and at least one memory 13014. The DU 1301 is mainly configured to send and receive a radio frequency signal, perform conversion between the radio frequency signal and a baseband signal, and perform some baseband processing.

The CU 1302 may include at least one processor 13022 and at least one memory 13021. The CU 1302 is mainly configured to: perform baseband processing, control the base station, and so on. The CU 1302 is a control center of the base station, and may also be referred to as a processing unit. For example, the CU 1302 may be configured to control the base station to perform corresponding operations or steps of the source network device or the target network device in the method shown in FIG. 5, FIG. 7, FIG. 8, or FIG. 9.

The CU 1302 and the DU 1301 may communicate with each other through an interface. A control plane (control plane, CP) interface may be an Fs-C interface, for example, an F1-C interface, and a user plane (user plane, UP) interface may be an Fs-U interface, for example, an F1-U interface. The DU 1301 and the CU 1302 may be physically disposed together, or may be physically disposed separately (in other words, the base station is a distributed base station). This is not limited.

Specifically, the baseband processing on the CU and the DU may be divided based on protocol layers of a wireless network. For example, functions of a PDCP layer and a layer above the PDCP layer are configured on the CU, and functions of protocol layers (for example, an RLC layer and a MAC layer) below the PDCP layer are configured on the DU. For another example, the CU implements functions of an RRC layer and a PDCP layer, and the DU implements functions of an RLC layer, a MAC layer, and a physical (physical, PHY) layer.

Optionally, the base station 1300 may include one or more remote units (RUs), one or more DUs, and one or more CUs. The DU may include at least one processor 13013 and at least one memory 13014, the RU may include at least one antenna 13011 and at least one radio frequency unit 13012, and the CU may include at least one processor 13022 and at least one memory 13021.

In an embodiment, the CU 1302 may include one or more boards. A plurality of boards may jointly support a radio access network (for example, a 5G network) of a single access standard, or may separately support radio access networks (such as an LTE network, a 5G network, or another network) of different access standards. The memory 13021 and the processor 13022 may serve one or more boards. In other words, a memory and a processor may be disposed on each board. Alternatively, a plurality of boards may share a same memory and a same processor. In addition, a necessary circuit may be further configured on each board. The DU 1301 may include one or more boards. A plurality of boards may jointly support a radio access network (for example, a 5G network) of a single access standard, or may separately support radio access networks (such as an LTE network, a 5G network, or another network) of different access standards. The memory 13014 and the processor 13013 may serve one or more boards. In other words, a memory and a processor may be disposed on each board. Alternatively, a plurality of boards may share a same memory and a same processor. In addition, a necessary circuit may be further configured on each board.

An embodiment of this application further provides a chip system, including a processor, where the processor is coupled to a memory. The memory is configured to store a program or instructions. When the program or the instructions is/are executed by the processor, the chip system is enabled to implement the method corresponding to the terminal device or the method corresponding to the network device (for example, the source network device or the target network device) in any one of the foregoing method embodiments.

Optionally, there may be one or more processors in the chip system. The processor may be implemented by hardware, or may be implemented by software. When the processor is implemented by the hardware, the processor may be a logic circuit, an integrated circuit, or the like. When the processor is implemented by the software, the processor may be a general-purpose processor, and is implemented by reading software code stored in the memory.

Optionally, there may also be one or more memories in the chip system. The memory and the processor may be integrated together, or may be separately disposed. This is not limited in this application. For example, the memory may be a non-transitory memory, for example, a read-only memory ROM. The memory and the processor may be integrated into a same chip, or may be separately disposed on different chips. A type of the memory and a manner of disposing the memory and the processor are not specifically limited in this application.

For example, the chip system may be a field programmable gate array (field programmable gate array, FPGA), an application-specific integrated circuit (application-specific integrated circuit, ASIC), a system on a chip (system on a chip, SoC), a central processing unit (central processing unit, CPU), a network processor (network processor, NP), a digital signal processor (digital signal processor, DSP), a microcontroller unit (microcontroller unit, MCU), a programmable logic device (programmable logic device, PLD), or another integrated chip.

It should be understood that the steps in the foregoing method embodiments may be implemented by using a hardware integrated logic circuit in the processor or by using instructions in a software form. The steps of the methods disclosed with reference to embodiments of this application may be directly performed by a hardware processor, or may be performed by a combination of hardware in the processor and a software module.

An embodiment of this application further provides a computer-readable storage medium. The computer storage medium stores computer-readable instructions. When a computer reads and executes the computer-readable instructions, the computer is enabled to perform the method in any one of the foregoing method embodiments.

An embodiment of this application further provides a computer program product. When a computer reads and executes the computer program product, the computer is enabled to perform the method in any one of the foregoing method embodiments.

An embodiment of this application further provides a communication system. The communication system includes a source network device and a target network device. Optionally, the communication system may further include at least one terminal device. In a CHO scenario, before the terminal device determines to be handed over to the target network device, the target network device may be a candidate target network device configured by the source network device. Optionally, the communication system may further include one or more other candidate target network devices configured by the source network device. Optionally, the communication system may further include a core network device.

It should be understood that, the processor in embodiments of this application may be a CPU, or may be another general-purpose processor, a DSP, an ASIC, an FPGA or another programmable logic device, a discrete gate or transistor logic device, a discrete hardware component, or the like. The general-purpose processor may be a microprocessor, or the processor may be any conventional processor or the like.

It should be further understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example and not limitation, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, the memory (the storage module) is integrated into the processor.

It should be noted that the memory described in this specification aims to include but is not limited to these memories and any memory of another appropriate type.

It should be understood that numbers in various embodiments of this application are merely for differentiation for ease of description. Sequence numbers of the foregoing processes or steps do not mean execution sequences. The execution sequences of the processes or steps should be determined based on functions and internal logic of the processes or steps, and should not constitute any limitation on the implementation processes of embodiments of the present invention.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use a different method to implement the described functions for each particular application, but it should not be considered that the implementation goes beyond the scope of this application as defined by the appended claims.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In several embodiments provided in this application, it should be understood that the disclosed system, apparatus, and method may be implemented in other manners. For example, the foregoing apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in an electrical form, a mechanical form, or other forms.

The units described as separate parts may or may not be physically separate, and parts displayed as units may or may not be physical units, to be specific, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a ROM, a RAM, a magnetic disk, or an optical disc.

## Claims

1. A communication method performed by a terminal device (140), or a chip configured in the terminal device, wherein the method comprises:
receiving first information of a candidate target cell from a source network device, wherein the first information comprises first public land mobile network, PLMN, information and/or first access and mobility management function, AMF, information, and comprises second PLMN information and/or second AMF information; the first information further comprises first conditional handover, CHO, configuration information and first area information that correspond to the first PLMN information and/or the first AMF information, and comprises second CHO configuration information and second area information that correspond to the second PLMN information and/or the second AMF information; and the first area information indicates a first area covered by the candidate target cell, and the second area information indicates a second area covered by the candidate target cell; and
determining (S503) a target cell, and target PLMN information and/or target AMF information based on the first information and an area in which a terminal device is currently located;
wherein the candidate target cell is an NTN cell that supports a plurality of PLMNs and/or AMFs.

2. The method according to claim 1, wherein the determining a target cell, and target PLMN information and/or target AMF information based on the first information and an area in which a terminal device is currently located comprises:
if a first CHO execution condition in the first CHO configuration information is met, and the terminal device is currently located in the first area, determining, by the terminal device (140), the candidate target cell as the target cell, and determining the first PLMN information as the target PLMN information and/or determining the first AMF information as the target AMF information.

3. The method according to claim 1 or 2, wherein the determining a target cell, and target PLMN information and/or target AMF information based on the first information and an area in which a terminal device is currently located comprises:
if the first CHO execution condition in the first CHO configuration information and a second CHO execution condition in the second CHO configuration information are both met, and the terminal device is currently located in the first area, determining, by the terminal device (140). the candidate target cell as the target cell, and determining the first PLMN information as the target PLMN information and/or determining the first AMF information as the target AMF information.

4. The method according to any one of claims 1 to 3, wherein after the terminal device (140) is successfully handed over to the target cell, the method further comprises:
sending (S504) a first message to a target network device, wherein the first message indicates that the terminal device has been successfully handed over to the target cell, and comprises the target PLMN information and/or the target AMF information, and the target network device is a network device that manages the target cell.

5. The method according to claim 4, wherein when random access channel RACH resource information comprised in the first CHO configuration information is different from RACH resource information comprised in the second CHO configuration information, the first message is encrypted by using a first key corresponding to the first CHO configuration information.

6. The method according to claim 4, wherein when RACH resource information comprised in the first CHO configuration information is the same as RACH resource information comprised in the second CHO configuration information, the sending a first message to a target network device comprises:
sending two first messages to the target network device, wherein one of the first messages is encrypted by using a first key corresponding to the first CHO configuration information, and the other first message is encrypted by using a second key corresponding to the second CHO configuration information.

7. The method according to any one of claims 1 to 6, wherein the first CHO configuration information comprises first CHO execution condition information, and the first CHO execution condition information indicates the first CHO execution condition that is of the candidate target cell and that corresponds to the first PLMN information and/or the first AMF information, and comprises one or more of signal quality-based execution condition information, time/timer-based execution condition information, or location-based execution condition information;
the first PLMN information comprises an identifier of a first PLMN, and the first AMF information comprises an identifier of a first AMF, or comprises an identifier of a first AMF and the identifier of the first PLMN;
the second CHO configuration information comprises second CHO execution condition information, and the second CHO execution condition information indicates the second CHO execution condition that is of the candidate target cell and that corresponds to the second PLMN information and/or the second AMF information, and comprises one or more of signal quality-based execution condition information, time/timer-based execution condition information, or location-based execution condition information; and
the second PLMN information comprises an identifier of a second PLMN, and the second AMF information comprises an identifier of a second AMF, or comprises an identifier of a second AMF and the identifier of the second PLMN.

8. The method according to any one of claims 1 to 7, wherein the method further comprises:
releasing the second PLMN information and/or the second AMF information, and releasing the second CHO configuration information and the second area information.

9. A communication method performed by a source network device, or a chip configured in the source network device, wherein the method comprises:
receiving first information of a candidate target cell from a candidate target network device, wherein the first information comprises first public land mobile network, PLMN, information and/or first access and mobility management function, AMF, information, and comprises second PLMN information and/or second AMF information; the first information further comprises first conditional handover, CHO, configuration information and first area information that correspond to the first PLMN information and/or the first AMF information, and comprises second CHO configuration information and second area information that correspond to the second PLMN information and/or the second AMF information; and the first area information indicates a first area covered by the candidate target cell, and the second area information indicates a second area covered by the candidate target cell; and
sending (S502) the first information of the candidate target cell to a terminal device;
wherein the candidate target cell is an NTN cell that supports a plurality of PLMNs and/or AMFs.

10. A communication method performed by a target network device, or a chip configured in the target network device, wherein the method comprises:
sending (S501) first information of a candidate target cell to a source network device, wherein the first information comprises first public land mobile network, PLMN, information and/or first access and mobility management function, AMF, information, and comprises second PLMN information and/or second AMF information; the first information further comprises first conditional handover, CHO, configuration information and first area information that correspond to the first PLMN information and/or the first AMF information, and comprises second CHO configuration information and second area information that correspond to the second PLMN information and/or the second AMF information; and the first area information indicates a first area covered by the candidate target cell, and the second area information indicates a second area covered by the candidate target cell; and
receiving a first message from a terminal device (140) if the terminal device determines the candidate target cell as a target cell, wherein the first message indicates that the terminal device has been successfully handed over to the target cell, and comprises target PLMN information and/or target AMF information, and the target PLMN information and/or the target AMF information are/is the first PLMN information and/or the first AMF information, or are/is the second PLMN information and/or the second AMF information;
wherein the candidate target cell is an NTN cell that supports a plurality of PLMNs and/or AMFs.

11. The method according to claim 10, wherein when random access channel RACH resource information comprised in the first CHO configuration information is different from RACH resource information comprised in the second CHO configuration information, the method further comprises:
determining, based on RACH resource information used by the terminal device to initiate a random access procedure, a first key for decrypting the first message, and decrypting the first message by using the first key.

12. The method according to claim 10, wherein when RACH resource information comprised in the first CHO configuration information is the same as RACH resource information comprised in the second CHO configuration information, the receiving a first message from a terminal device comprises:
receiving two first messages from the terminal device; and
decrypting the two first messages by using a first key and/or a second key, wherein the first key is a key corresponding to the first CHO configuration information, and the second key is a key corresponding to the second CHO configuration information.

13. The method according to any one of claims 10 to 12, wherein the method further comprises:
sending a second message to a target AMF corresponding to the target AMF information, wherein the second message indicates, to the target AMF, that the terminal device has completed the handover.

14. The method according to any one of claims 10 to 13, wherein the method further comprises:
sending a third message to an AMF corresponding to AMF information other than the target AMF information in the first AMF information and the second AMF information, wherein the third message indicates the another AMF to release a connection established for the terminal device.

15. The method according to claim 14, wherein the third message comprises a connection release cause value, and the connection release cause value is a location exception or AMF unavailability.

## Patentansprüche

1. Kommunikationsverfahren, das durch ein Endgerät (140) durchgeführt wird, oder Chip, der in dem Endgerät konfiguriert ist, wobei das Verfahren Folgendes umfasst:
Empfangen von ersten Informationen einer Kandidaten-Zielzelle von einem Quellnetzwerkgerät, wobei die ersten Informationen erste Informationen eines öffentlichen terrestrischen Mobilfunknetzwerks, PLMN, und/oder erste Informationen einer Zugriffs- und Mobilitätsverwaltungsfunktion, AMF, umfassen und zweite PLMN-Informationen und/oder zweite AMF-Informationen umfassen; wobei die ersten Informationen ferner erste Konfigurationsinformationen für eine bedingte Übergabe, CHO, und erste Bereichsinformationen umfassen, die den ersten PLMN-Informationen und/oder den ersten AMF-Informationen entsprechen, und zweite CHO-Konfigurationsinformationen und zweite Bereichsinformationen umfassen, die den zweiten PLMN-Informationen und/oder den zweiten AMF-Informationen entsprechen; und wobei die ersten Bereichsinformationen einen durch die Kandidaten-Zielzelle abgedeckten ersten Bereich anzeigen und die zweiten Bereichsinformationen einen durch die Kandidaten-Zielzelle abgedeckten zweiten Bereich anzeigen; und
Bestimmen (S503) einer Zielzelle und von Ziel-PLMN-Informationen und/oder Ziel-AMF-Informationen basierend auf den ersten Informationen und einem Bereich, in dem sich ein Endgerät derzeit befindet;
wobei die Kandidaten-Zielzelle eine NTN-Zelle ist, die eine Mehrzahl von PLMNs und/oder AMFs unterstützt.

2. Verfahren nach Anspruch 1, wobei das Bestimmen einer Zielzelle und von Ziel-PLMN-Informationen und/oder Ziel-AMF-Informationen basierend auf den ersten Informationen und einem Bereich, in dem sich ein Endgerät derzeit befindet, Folgendes umfasst:
wenn eine erste CHO-Ausführungsbedingung in den ersten CHO-Konfigurationsinformationen erfüllt ist und sich das Endgerät derzeit in dem ersten Bereich befindet, Bestimmen, durch das Endgerät (140), der Kandidaten-Zielzelle als die Zielzelle, und Bestimmen der ersten PLMN-Informationen als die Ziel-PLMN-Informationen und/oder Bestimmen der ersten AMF-Informationen als die Ziel-AMF-Informationen.

3. Verfahren nach Anspruch 1 oder 2, wobei das Bestimmen einer Zielzelle und von Ziel-PLMN-Informationen und/oder Ziel-AMF-Informationen basierend auf den ersten Informationen und einem Bereich, in dem sich ein Endgerät derzeit befindet, Folgendes umfasst:
wenn die erste CHO-Ausführungsbedingung in den ersten CHO-Konfigurationsinformationen und eine zweite CHO-Ausführungsbedingung in den zweiten CHO-Konfigurationsinformationen beide erfüllt sind und sich das Endgerät derzeit in dem ersten Bereich befindet, Bestimmen, durch das Endgerät (140), der Kandidaten-Zielzelle als die Zielzelle, und Bestimmen der ersten PLMN-Informationen als die Ziel PLMN-Informationen und/oder Bestimmen der ersten AMF-Informationen als die Ziel-AMF-Informationen.

4. Verfahren nach einem der Ansprüche 1 bis 3, wobei, nachdem das Endgerät (140) erfolgreich an die Zielzelle übergeben ist, das Verfahren ferner Folgendes umfasst:
Senden (S504) einer ersten Nachricht an ein Zielnetzwerkgerät, wobei die erste Nachricht anzeigt, dass das Endgerät erfolgreich an die Zielzelle übergeben wurde, und die Ziel PLMN-Informationen und/oder die Ziel-AMF-Informationen umfasst, und wobei das Zielnetzwerkgerät ein Netzwerkgerät ist, das die Zielzelle verwaltet.

5. Verfahren nach Anspruch 4, wobei, wenn sich in den ersten CHO-Konfigurationsinformationen enthaltene Direktzugriffskanal-RACH-Ressourceninformationen von in den zweiten CHO-Konfigurationsinformationen enthaltenen RACH-Ressourceninformationen unterscheiden, die erste Nachricht unter Verwendung eines ersten Schlüssels verschlüsselt wird, der den ersten CHO-Konfigurationsinformationen entspricht.

6. Verfahren nach Anspruch 4, wobei, wenn in den ersten CHO-Konfigurationsinformationen enthaltene RACH-Ressourceninformationen dieselben wie in den zweiten CHO-Konfigurationsinformationen enthaltene RACH-Ressourceninformationen sind, das Senden einer ersten Nachricht an ein Zielnetzwerkgerät Folgendes umfasst:
Senden von zwei ersten Nachrichten an das Zielnetzwerkgerät, wobei eine der ersten Nachrichten unter Verwendung eines ersten Schlüssels verschlüsselt wird, der den ersten CHO-Konfigurationsinformationen entspricht, und die andere erste Nachricht unter Verwendung eines zweiten Schlüssels verschlüsselt wird, der den zweiten CHO-Konfigurationsinformationen entspricht.

7. Verfahren nach einem der Ansprüche 1 bis 6, wobei die ersten CHO-Konfigurationsinformationen erste CHO-Ausführungsbedingungsinformationen enthalten, und wobei die ersten CHO-Ausführungsbedingungsinformationen die erste CHO-Ausführungsbedingung anzeigen, die zu der Kandidaten-Zielzelle gehört und die den ersten PLMN-Informationen und/oder den ersten AMF-Informationen entspricht, und eines oder mehrere von signalqualitätsbasierten Ausführungsbedingungsinformationen, zeit-/zeitgeberbasierten Ausführungsbedingungsinformationen oder standortbasierten Ausführungsbedingungsinformationen umfassen;
wobei die ersten PLMN-Informationen eine Kennung eines ersten PLMN umfassen und die ersten AMF-Informationen eine Kennung einer ersten AMF umfassen oder eine Kennung einer ersten AMF und die Kennung des ersten PLMN umfassen; wobei die zweiten CHO-Konfigurationsinformationen zweite CHO-Ausführungsbedingungsinformationen umfassen, und wobei die zweiten CHO-Ausführungsbedingungsinformationen die zweite CHO-Ausführungsbedingung anzeigen, die zu der Kandidaten-Zielzelle gehört und die den zweiten PLMN-Informationen und/oder den zweiten AMF-Informationen entspricht, und eines oder mehrere von signalqualitätsbasierten Ausführungsbedingungsinformationen, zeit-/zeitgeberbasierten Ausführungsbedingungsinformationen oder standortbasierten Ausführungsbedingungsinformationen umfassen; und
wobei die zweiten PLMN-Informationen eine Kennung eines zweiten PLMN umfassen und die zweiten AMF-Informationen eine Kennung einer zweiten AMF umfassen oder eine Kennung einer zweiten AMF und die Kennung des zweiten PLMN umfassen.

8. Verfahren nach einem der Ansprüche 1 bis 7, wobei das Verfahren ferner Folgendes umfasst:
Freigeben der zweiten PLMN-Informationen und/oder der zweiten AMF-Informationen, und Freigeben der zweiten CHO-Konfigurationsinformationen und der zweiten Bereichsinformationen.

9. Kommunikationsverfahren, das durch ein Quellnetzwerkgerät durchgeführt wird, oder Chip, der in dem Quellnetzwerkgerät konfiguriert ist, wobei das Verfahren Folgendes umfasst:
Empfangen von ersten Informationen einer Kandidaten-Zielzelle von einem Kandidaten-Zielnetzwerkgerät, wobei die ersten Informationen erste Informationen eines öffentlichen terrestrischen Mobilfunknetzwerks, PLMN, und/oder erste Informationen einer Zugriffs- und Mobilitätsverwaltungsfunktion, AMF, umfassen und zweite PLMN-Informationen und/oder zweite AMF-Informationen umfassen;
wobei die ersten Informationen ferner erste Konfigurationsinformationen für eine bedingte Übergabe, CHO, und erste Bereichsinformationen umfassen, die den ersten PLMN-Informationen und/oder den ersten AMF-Informationen entsprechen, und zweite CHO-Konfigurationsinformationen und zweite Bereichsinformationen umfassen, die den zweiten PLMN-Informationen und/oder den zweiten AMF-Informationen entsprechen; und wobei die ersten Bereichsinformationen einen durch die Kandidaten-Zielzelle abgedeckten ersten Bereich anzeigen und die zweiten Bereichsinformationen einen durch die Kandidaten-Zielzelle abgedeckten zweiten Bereich anzeigen; und
Senden (S502) der ersten Informationen der Kandidaten-Zielzelle an ein Endgerät; wobei die Kandidaten-Zielzelle eine NTN-Zelle ist, die eine Mehrzahl von PLMNs und/oder AMFs unterstützt.

10. Kommunikationsverfahren, das durch ein Zielnetzwerkgerät durchgeführt wird, oder Chip, der in dem Zielnetzwerkgerät konfiguriert ist, wobei das Verfahren Folgendes umfasst:
Senden (S501) von ersten Informationen einer Kandidaten-Zielzelle an ein Quellnetzwerkgerät, wobei die ersten Informationen erste Informationen eines öffentlichen terrestrischen Mobilfunknetzwerks, PLMN, und/oder erste Informationen einer Zugriffs- und Mobilitätsverwaltungsfunktion, AMF, umfassen und zweite PLMN-Informationen und/oder zweite AMF-Informationen umfassen; wobei die ersten Informationen ferner erste Konfigurationsinformationen für eine bedingte Übergabe, CHO, und erste Bereichsinformationen umfassen, die den ersten PLMN-Informationen und/oder den ersten AMF-Informationen entsprechen, und zweite CHO-Konfigurationsinformationen und zweite Bereichsinformationen umfassen, die den zweiten PLMN-Informationen und/oder den zweiten AMF-Informationen entsprechen; und wobei die ersten Bereichsinformationen einen durch die Kandidaten-Zielzelle abgedeckten ersten Bereich anzeigen und die zweiten Bereichsinformationen einen durch die Kandidaten-Zielzelle abgedeckten zweiten Bereich anzeigen; und
Empfangen einer ersten Nachricht von einem Endgerät (140), wenn das Endgerät die Kandidaten-Zielzelle als eine Zielzelle bestimmt, wobei die erste Nachricht anzeigt, dass das Endgerät erfolgreich an die Zielzelle übergeben wurde, und Ziel-PLMN-Informationen und/oder Ziel-AMF-Informationen umfasst, und wobei die Ziel-PLMN-Informationen und/oder die Ziel-AMF-Informationen die ersten PLMN-Informationen und/oder die ersten AMF-Informationen sind oder die zweiten PLMN-Informationen und/oder die zweiten AMF-Informationen sind;
wobei die Kandidaten-Zielzelle eine NTN-Zelle ist, die eine Mehrzahl von PLMNs und/oder AMFs unterstützt.

11. Verfahren nach Anspruch 10, wobei, wenn sich in den ersten CHO-Konfigurationsinformationen enthaltene Direktzugriffskanal-RACH-Ressourceninformationen von in den zweiten CHO-Konfigurationsinformationen enthaltenen RACH-Ressourceninformationen unterscheiden, das Verfahren ferner Folgendes umfasst:
Bestimmen, basierend auf RACH-Ressourceninformationen, die durch das Endgerät verwendet werden, um einen Direktzugriffsvorgang zu initiieren, eines ersten Schlüssels zum Entschlüsseln der ersten Nachricht, und Entschlüsseln der ersten Nachricht unter Verwendung des ersten Schlüssels.

12. Verfahren nach Anspruch 10, wobei, wenn in den ersten CHO-Konfigurationsinformationen enthaltene RACH-Ressourceninformationen dieselben wie in den zweiten CHO-Konfigurationsinformationen enthaltene RACH-Ressourceninformationen sind, das Empfangen einer ersten Nachricht von einem Endgerät Folgendes umfasst:
Empfangen von zwei ersten Nachrichten von dem Endgerät; und
Entschlüsseln der zwei ersten Nachrichten unter Verwendung eines ersten Schlüssels und/oder eines zweiten Schlüssels, wobei der erste Schlüssel ein Schlüssel ist, der den ersten CHO-Konfigurationsinformationen entspricht, und der zweite Schlüssel ein Schlüssel ist, der den zweiten CHO-Konfigurationsinformationen entspricht.

13. Verfahren nach einem der Ansprüche 10 bis 12, wobei das Verfahren ferner Folgendes umfasst:
Senden einer zweiten Nachricht an eine Ziel-AMF, die den Ziel-AMF-Informationen entspricht, wobei die zweite Nachricht der Ziel-AMF anzeigt, dass das Endgerät die Übergabe abgeschlossen hat.

14. Verfahren nach einem der Ansprüche 10 bis 13, wobei das Verfahren ferner Folgendes umfasst:
Senden einer dritten Nachricht an eine AMF, die den AMF-Informationen außer den Ziel-AMF-Informationen in den ersten AMF-Informationen und den zweiten AMF-Informationen entspricht, wobei die dritte Nachricht der anderen AMF anzeigt, eine für das Endgerät hergestellte Verbindung abzubauen.

15. Verfahren nach Anspruch 14, wobei die dritte Nachricht einen Verbindungsabbaugrundwert umfasst und der Verbindungsabbaugrundwert eine Standortausnahme oder AMF-Nichtverfügbarkeit ist.

## Revendications

1. Procédé de communication réalisé par un dispositif terminal (140), ou une puce configurée dans le dispositif terminal, le procédé comprenant :
la réception de premières informations d'une cellule cible candidate en provenance d'un dispositif réseau source, dans lequel les premières informations comprennent des premières informations de réseau mobile terrestre public, PLMN, et/ou des premières informations de fonction de gestion de mobilité et d'accès, AMF, et comprennent des deuxièmes informations de PLMN et/ou des deuxièmes informations d'AMF ; les premières informations comprennent en outre des premières informations de configuration de transfert conditionnel, CHO, et des premières informations de zone qui correspondent aux premières informations de PLMN et/ou aux premières informations d'AMF, et comprennent des deuxièmes informations de configuration de CHO et des deuxièmes informations de zone qui correspondent aux deuxièmes informations de PLMN et/ou aux deuxièmes informations d'AMF ; et les premières informations de zone indiquent une première zone couverte par la cellule cible candidate, et les deuxièmes informations de zone indiquent une deuxième zone couverte par la cellule cible candidate ; et
la détermination (S503) d'une cellule cible, et d'informations de PLMN cible et/ou d'informations d'AMF cible sur la base des premières informations et d'une zone dans laquelle un dispositif terminal est actuellement situé ;
dans lequel la cellule cible candidate est une cellule NTN qui prend en charge une pluralité de PLMN et/ou d'AMF.

2. Procédé selon la revendication 1, dans lequel la détermination d'une cellule cible, et d'informations de PLMN cible et/ou d'informations d'AMF cible sur la base des premières informations et d'une zone dans laquelle un dispositif terminal est actuellement situé comprend :
si une première condition d'exécution de CHO dans les premières informations de configuration de CHO est satisfaite, et que le dispositif terminal est actuellement situé dans la première zone, la détermination, par le dispositif terminal (140), de la cellule cible candidate en tant que cellule cible, et la détermination des premières informations de PLMN en tant qu'informations de PLMN cible et/ou la détermination des premières informations d'AMF en tant qu'informations d'AMF cible.

3. Procédé selon la revendication 1 ou la revendication 2, dans lequel la détermination d'une cellule cible, et d'informations de PLMN cible et/ou d'informations d'AMF cible sur la base des premières informations et d'une zone dans laquelle un dispositif terminal est actuellement situé comprend :
si la première condition d'exécution de CHO dans les premières informations de configuration de CHO et une deuxième condition d'exécution de CHO dans les deuxièmes informations de configuration de CHO sont toutes deux satisfaites, et que le dispositif terminal est actuellement situé dans la première zone, la détermination, par le dispositif terminal (140), de la cellule cible candidate en tant que cellule cible, et la détermination des premières informations de PLMN en tant qu'informations de PLMN cible et/ou la détermination des premières informations d'AMF en tant qu'informations d'AMF cible.

4. Procédé selon l'une quelconque des revendications 1 à 3, dans lequel après que le dispositif terminal (140) a été transféré avec succès à la cellule cible, le procédé comprend en outre :
l'envoi (S504) d'un premier message à un dispositif réseau cible, dans lequel le premier message indique que le dispositif terminal a été transféré avec succès à la cellule cible, et comprend les informations de PLMN cible et/ou les informations d'AMF cible, et le dispositif réseau cible est un dispositif réseau qui gère la cellule cible.

5. Procédé selon la revendication 4, dans lequel lorsque les informations de ressource de canal d'accès aléatoire RACH comprises dans les premières informations de configuration de CHO sont différentes des informations de ressource RACH comprises dans les deuxièmes informations de configuration de CHO, le premier message est chiffré à l'aide d'une première clé correspondant aux premières informations de configuration de CHO.

6. Procédé selon la revendication 4, dans lequel lorsque les informations de ressource RACH comprises dans les premières informations de configuration de CHO sont les mêmes que les informations de ressource RACH comprises dans les deuxièmes informations de configuration de CHO, l'envoi d'un premier message à un dispositif réseau cible comprend :
l'envoi de deux premiers messages au dispositif réseau cible, dans lequel l'un des premiers messages est chiffré à l'aide d'une première clé correspondant aux premières informations de configuration de CHO, et l'autre premier message est chiffré à l'aide d'une deuxième clé correspondant aux deuxièmes informations de configuration de CHO.

7. Procédé selon l'une quelconque des revendications 1 à 6, dans lequel les premières informations de configuration de CHO comprennent des premières informations de condition d'exécution de CHO, et les premières informations de condition d'exécution de CHO indiquent la première condition d'exécution de CHO qui est de la cellule cible candidate et qui correspond aux premières informations de PLMN et/ou aux premières informations d'AMF et comprend une ou plusieurs informations de condition d'exécution basées sur la qualité de signal, des informations de condition d'exécution basées sur le temps/temporisateur, ou des informations de condition d'exécution basées sur l'emplacement ;
les premières informations de PLMN comprennent un identifiant d'un premier PLMN, et les premières informations d'AMF comprennent un identifiant d'une première AMF, ou comprennent un identifiant d'une première AMF et l'identifiant du premier PLMN ;
les deuxièmes informations de configuration de CHO comprennent des deuxièmes informations de condition d'exécution de CHO, et les deuxièmes informations de condition d'exécution de CHO indiquent la deuxième condition d'exécution de CHO qui est de la cellule cible candidate et qui correspond aux deuxièmes informations de PLMN et/ou aux deuxièmes informations d'AMF, et comprend une ou plusieurs informations de condition d'exécution basées sur la qualité de signal, d'informations de condition d'exécution basées sur le temps/temporisateur, ou d'informations de condition d'exécution basées sur l'emplacement ; et
les deuxièmes informations de PLMN comprennent un identifiant d'un deuxième PLMN, et les deuxièmes informations d'AMF comprennent un identifiant d'une deuxième AMF, ou comprennent un identifiant d'une deuxième AMF et l'identifiant du deuxième PLMN.

8. Procédé selon l'une quelconque des revendications 1 à 7, dans lequel le procédé comprend en outre :
la libération des deuxièmes informations de PLMN et/ou des deuxièmes informations d'AMF, et la libération des deuxièmes informations de configuration de CHO et des deuxièmes informations de zone.

9. Procédé de communication réalisé par un dispositif réseau source, ou une puce configurée dans le dispositif réseau source, le procédé comprenant :
la réception de premières informations d'une cellule cible candidate en provenance d'un dispositif réseau cible candidat, dans lequel les premières informations comprennent des premières informations de réseau mobile terrestre public, PLMN, et/ou des premières informations de fonction de gestion de mobilité et d'accès, AMF, et comprend des deuxièmes informations de PLMN et/ou des deuxièmes informations d'AMF ; les premières informations comprennent en outre des premières informations de configuration de transfert conditionnel, CHO, et des premières informations de zone qui correspondent aux premières informations de PLMN et/ou aux premières informations d'AMF, et comprennent des deuxièmes informations de configuration de CHO et des deuxièmes informations de zone qui correspondent aux deuxièmes informations de PLMN et/ou aux deuxièmes informations d'AMF ; et les premières informations de zone indiquent une première zone couverte par la cellule cible candidate, et les deuxièmes informations de zone indiquent une deuxième zone couverte par la cellule cible candidate ; et
l'envoi (S502) des premières informations de la cellule cible candidate à un dispositif terminal ;
dans lequel la cellule cible candidate est une cellule NTN qui prend en charge une pluralité de PLMN et/ou d'AMF.

10. Procédé de communication réalisé par un dispositif réseau cible, ou une puce configurée dans le réseau cible, le procédé comprenant :
l'envoi (S501) de premières informations d'une cellule cible candidate à un dispositif réseau source, dans lequel les premières informations comprennent des premières informations de réseau mobile terrestre public, PLMN, et/ou des premières informations de fonction de gestion de mobilité et d'accès, AMF, et comprennent des deuxièmes informations de PLMN et/ou des deuxièmes informations d'AMF ; les premières informations comprennent en outre des premières informations de configuration de transfert conditionnel, CHO, et des premières informations de zone qui correspondent aux premières informations de PLMN et/ou aux premières informations d'AMF, et comprennent des deuxièmes informations de configuration de CHO et des deuxièmes informations de zone qui correspondent aux deuxièmes informations de PLMN et/ou aux deuxièmes informations d'AMF ; et les premières informations de zone indiquent une première zone couverte par la cellule cible candidate, et les deuxièmes informations de zone indiquent une deuxième zone couverte par la cellule cible candidate ; et
la réception d'un premier message en provenance d'un dispositif terminal (140) si le dispositif terminal détermine la cellule cible candidate en tant que cellule cible, dans lequel le premier message indique que le dispositif terminal a été transféré avec succès à la cellule cible, et comprend des informations de PLMN cible et/ou des informations d'AMF cible, et les informations de PLMN cible et/ou les informations d'AMF cible sont les premières informations de PLMN et/ou les premières informations d'AMF, ou sont les deuxièmes informations de PLMN et/ou les deuxièmes informations d'AMF ; dans lequel la cellule cible candidate est une cellule NTN qui prend en charge une pluralité de PLMN et/ou d'AMF.

11. Procédé selon la revendication 10, dans lequel lorsque les informations de ressource de canal d'accès aléatoire RACH comprises dans les premières informations de configuration de CHO sont différentes des informations de ressource RACH comprises dans les deuxièmes informations de configuration de CHO, le procédé comprend en outre :
la détermination, sur la base d'informations de ressource RACH utilisées par le dispositif terminal pour déclencher une procédure d'accès aléatoire, d'une première clé pour déchiffrer le premier message, et le déchiffrement du premier message à l'aide de la première clé.

12. Procédé selon la revendication 10, dans lequel lorsque les informations de ressource RACH comprises dans le premier CHO sont les mêmes que les informations de ressource RACH comprises dans les deuxièmes informations de configuration de CHO, la réception d'un premier message en provenance d'un dispositif terminal comprend :
la réception de deux premiers messages en provenance du dispositif terminal ; et
le déchiffrement des deux premiers messages à l'aide d'une première clé et/ou d'une deuxième clé, dans lequel la première clé est une clé correspondant aux premières informations de configuration de CHO, et la deuxième clé est une clé correspondant aux deuxièmes informations de configuration de CHO.

13. Procédé selon l'une quelconque des revendications 10 à 12, le procédé comprenant en outre :
l'envoi d'un deuxième message à une AMF cible correspondant aux informations d'AMF cible, dans lequel le deuxième message indique, à l'AMF cible, que le dispositif terminal a terminé le transfert.

14. Procédé selon l'une quelconque des revendications 10 à 13, le procédé comprenant en outre :
l'envoi d'un troisième message à une AMF correspondant à des informations d'AMF autres que les informations d'AMF cible dans les premières informations d'AMF et les deuxièmes informations d'AMF, dans lequel le troisième message indique à l'autre AMF de libérer une connexion établie pour le dispositif terminal.

15. Procédé selon la revendication 14, dans lequel le troisième message comprend une valeur de cause de libération de connexion, et la valeur de cause de libération de connexion est une exception d'emplacement ou une indisponibilité d'AMF.
